(19) Europäisches Patentamt / European Patent Office / Office européen des brevets

(11) **EP 4 676 034 A1**

(12) **EUROPEAN PATENT APPLICATION**

(43) Date of publication:
**07.01.2026 Bulletin 2026/02**

(21) Application number: **24306097.7**

(22) Date of filing: **03.07.2024**

(51) International Patent Classification (IPC):
*H04N 19/105* (2014.01)        *H04N 19/109* (2014.01)
*H04N 19/176* (2014.01)        *H04N 19/52* (2014.01)

(52) Cooperative Patent Classification (CPC):
**H04N 19/52; H04N 19/105; H04N 19/109;**
**H04N 19/176**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **LE LEANNEC, Fabrice**
  **35830 BETTON (FR)**
• **NASER, Karam**
  **35250 MOUAZE (FR)**
• **CHEN, Ya**
  **35700 RENNES (FR)**
• **RADOSAVLJEVIC, Milos**
  **35000 RENNES (FR)**

(74) Representative: **Interdigital**
**Immeuble ZEN 2**
**845 A, avenue des Champs Blancs**
**35510 Cesson-Sévigné (FR)**

(54) **OCCURRENCE-BASED MV/BV SORTING**

(57)    A method and an apparatus for encoding or decoding an image or a video are provided wherein, for at least one block of the image or video, a list of motion vector candidates for predicting the at least one block is obtained. A histogram of occurrences of the motion vector candidates is determined and the list of motion vector candidates is sorted based on the histogram. The at least one block is encoded or decoded using one or more motion vector candidates selected from the list.

4000

Obtaining candidates — 4010

↓

Sorting list based on occurrence histogram — 4020

↓

Decoding the Block — 4030

FIG. 40

EP 4 676 034 A1

**Description**

TECHNICAL FIELD

The present embodiments generally relate to video compression. The present embodiments relate to a method and an apparatus for encoding or decoding an image or a video. More particularly, the present embodiments relate to improving prediction in video compression system.

BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. In inter prediction, motion vectors used in motion compensation are often predicted from motion vector predictor. To reconstruct the video, the compressed data are decoded by inverse processes corresponding to the entropy coding, quantization, transform, and prediction.

SUMMARY

According to an aspect, a method for encoding an image or a video is provided. The method comprises, for at least one block of the image or video, obtaining a list of motion vector candidates for predicting the at least one block, obtaining a histogram of occurrences of the motion vector candidates, sorting the list of motion vector candidates based on the histogram, and encoding the at least one block using one or more motion vector candidates selected from the list.

According to another aspect, an apparatus for encoding an image or a video is provided. The apparatus comprises one or more processors operable to, for at least one block of the image or video, obtain a list of motion vector candidates for predicting the at least one block, obtain a histogram of occurrences of the motion vector candidates, sort the list of motion vector candidates based on the histogram, and encode the at least one block using one or more motion vector candidates selected from the list.

According to an aspect, a method for decoding an image or a video is provided. The method comprises, for at least one block of the image or video, obtaining a list of motion vector candidates for predicting the at least one block, obtaining a histogram of occurrences of the motion vector candidates, sorting the list of motion vector candidates based on the histogram, and decoding the at least one block using one or more motion vector candidates selected from the list.

According to another aspect, an apparatus for decoding an image or a video is provided. The apparatus comprises one or more processors operable to, for at least one block of the image or video, obtain a list of motion vector candidates for predicting the at least one block, obtain a histogram of occurrences of the motion vector candidates, sort the list of motion vector candidates based on the histogram, and decode the at least one block using one or more motion vector candidates selected from the list.

Further embodiments that can be used alone or in combination are described herein.

One or more embodiments also provide a computer program comprising instructions which when executed by one or more processors cause the one or more processors to perform any one of the methods for encoding or decoding an image or a video according to any of the embodiments described herein. One or more of the present embodiments also provide a non-transitory computer readable medium and/or a computer readable storage medium having stored thereon instructions for encoding or decoding an image or a video according to the methods described herein.

One or more embodiments also provide a computer readable storage medium having stored thereon a bitstream generated according to the methods described herein. One or more embodiments also provide a method and apparatus for transmitting or receiving the bitstream generated according to the methods described above.

According to an aspect, a device is provided that comprises an apparatus for decoding an image or a video according to any one of the embodiments described above; and at least one of (i) an antenna configured to receive or transmit a signal, the signal including data representative of the image or video, (ii) a band limiter configured to limit the signal to a band of frequencies that includes the data representative of the image or video, or (iii) a display configured to display the image or video. In a variant, the device comprises at least one of a television, a cell phone, a tablet, a set-top box.

BRIEF DESCRIPTION OF THE DRAWINGS

FIG. 1A illustrates a block diagram of a system within which aspects of the present embodiments may be implemented according to an embodiment.

FIG. 1B illustrates a block diagram of a system within which aspects of the present embodiments may be implemented according to another embodiment.

FIG. 1C illustrates a block diagram of a system within which aspects of the present embodiments may be implemented according to another embodiment.

FIG. 2 illustrates a block diagram of an embodiment of a video encoder within which aspects of the present embodiments may be implemented.

FIG. 3 illustrates a block diagram of an embodiment of a video decoder within which aspects of the present embodiments may be implemented.

FIG. 4 illustrates an example of Coding Tree Unit, Coding Unit and Prediction Unit structures to represent a compressed HEVC picture.

FIG. 5 illustrates an example of Coding Tree Unit, Prediction Unit and Transform Unit in HEVC standard.

FIG. 6 illustrates an example of Partitioning of Coding Units into Prediction Units.

FIG. 7 illustrates an example of a CTU division and corresponding coding tree according to VVC video standard.

FIG. 8 illustrates an example of split modes supported in a multi-type tree partitioning of VVC.

FIG. 9 illustrates an example of signaling of inter prediction information according to the HEVC specification.

FIG. 10 illustrates an example of MVP candidate list construction in AMVP mode of HEVC.

FIG. 11 illustrates an example of neighboring spatial locations A0, A1 (left) B0, B1, B2 (above) and collocated blocks for TMVP (H and C) of a current block.

FIG. 12 illustrates an example of positions of spatial and temporal motion vector predictors used in a merge mode in HEVC. Left part shows spatial merge candidates, Right part shows temporal merge candidates.

FIG. 13 illustrates an example of construction of a list of merge motion vector predictor candidates in HEVC.

FIG. 14 illustrates an example of an overall process for construction of the list of merge motion vector predictor candidates in HEVC.

FIG. 15 illustrates an example of whole-block and sub-block-based motion representation categories in VVC.

FIG. 16 illustrates an example of non-sub-block merge candidate list construction according to VVC standard.

FIG. 17 illustrates an example of allowed motion vector differences (MVd).

FIG. 18 illustrates an example of control point based affine motion models supported by VVC.

Left part shows 4-parameter affine model. Right part shows 6-parameter affine model.

FIG. 19 illustrates an example of affine motion field representation on a 4x4 subblock basis.

FIG. 20 illustrates an example of locations of inherited affine motion predictors.

FIG. 21 illustrates an example of Control point motion vector inheritance.

FIG. 22 illustrates an example of Locations of Candidates position for constructed affine merge mode.

FIG. 23 illustrates an example of Spatial neighboring and non-adjacent block locations used to derive spatial merge candidates.

FIG. 24 illustrates an example of template matching performed on a search area around an initial MV.

FIG. 25 illustrates an example of Bilateral matching principle.

FIG. 26 illustrates an example of AMVP-merge enabling for a bi-predicted block with both reference picture in the past or in the future.

FIG. 27 illustrates an example of template and reference samples of a template in reference pictures.

FIG. 28 illustrates an example of template and reference samples of the template for block with sub-block motion using the motion information of the subblocks of the current block.

FIG. 29 illustrates an example of additional directions along $k \times \pi/8$ diagonal angles (white positions are used in the anchor).

FIG. 30 illustrates an example of principle of Local Illumination Compensation (LIC).

FIG. 31 illustrates an example of a current CTU processing order and its available reference samples in current and left CTU.

FIG. 32 illustrates an example of how to derive AR-BVP.

FIG. 33 illustrates an example of five positions in $B_n$ (n is set to 1).

FIG. 34 illustrates an example of padding candidates for replacement of the zero-vector in the IBC list.

FIG. 35 illustrates an example of IBC candidate clustering based on a L2 distance and the TM cost.

FIG. 36 illustrates an example of Intra template matching search area.

FIG. 37 illustrates an example of non-adjacent spatial neighboring candidates for OBIC mode.

FIG. 38 illustrates an example of a histogram of occurrences (HoC) of IPM modes in a spatial neighborhood of a CU.

FIG. 39 illustrates an example of a method for encoding a block of a video according to an embodiment.

FIG. 40 illustrates an example of a method for decoding a block of a video according to an embodiment.

FIG. 41 illustrates an example of a method for obtaining an occurrence-based sorted list of MV prediction candidates in an inter merge mode, according to an embodiment.

FIG. 42 shows two remote devices communicating over a communication network in accordance with an example of the present principles.

FIG. 43 shows the syntax of a signal in accordance with an example of the present principles.

DETAILED DESCRIPTION

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects.

Indeed, all of the different aspects can be combined and interchanged to provide further aspects. Moreover, the aspects can be combined and interchanged with aspects described in earlier filings as well.

The aspects described and contemplated in this application can be implemented in many different forms. FIGs.

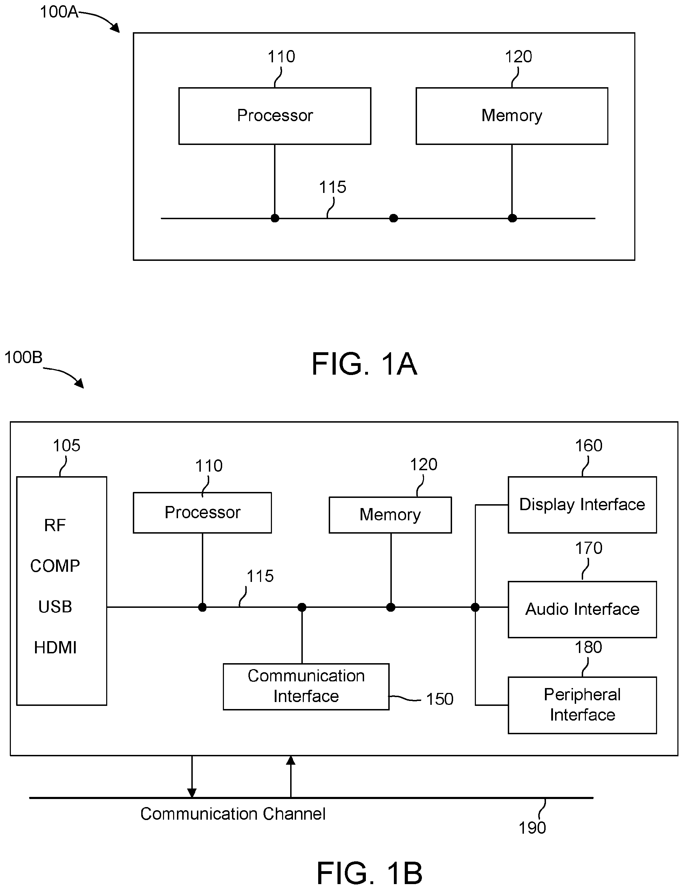

1A, 1B, 1C, 2 and 3 below provide some embodiments, but other embodiments are contemplated and the discussion of FIGs. 1A, 1B, 1C, 2 and 3 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

The present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

FIG. 1A-1C illustrates block diagrams of examples of systems in which various aspects and embodiments can be implemented. Any one of the systems 100A, 100B or 100B may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. In various embodiments, the system 100A, 100B or 100C is communicatively coupled to other systems, or to other electronic devices, via, for example, a communications bus or through dedicated input and/or output ports. In various embodiments, the system 100A, 100B or 100C is configured to implement one or more of the aspects described in this application.

FIG. 1A illustrates a block diagram of an example of a system in which various aspects and embodiments can be implemented. The system 100A includes at least one processor 110 configured to execute instructions loaded therein for implementing, for example, the various aspects described in this application. Processor 110 may include embedded memory, input output interface, and various other circuitries as known in the art. The system 100A includes at least one memory 120, e.g., a volatile memory device, and/or a non-volatile memory device, including, but not limited to, EEPROM, ROM, PROM, RAM, DRAM, SRAM, flash, magnetic disk drive, and/or optical disk drive. The memory 120 may include an internal storage device, an attached storage device, and/or a network accessible storage device, as non-limiting examples. The processor 110 may be interconnected to the memory 120 by an interconnection bus 115.

Program code to be loaded onto processor 110 to perform the various aspects described in this application is subsequently loaded onto memory 120 for execution by processor 110.

In some embodiments, memory inside of the processor 110 is used to store program code instructions and to provide working memory for processing that is needed during encoding or decoding. The input to the elements of system 100A may be provided through various input devices (not represented). Both Processor 110 and memory 120 can also have one or more additional interconnections to external connections.

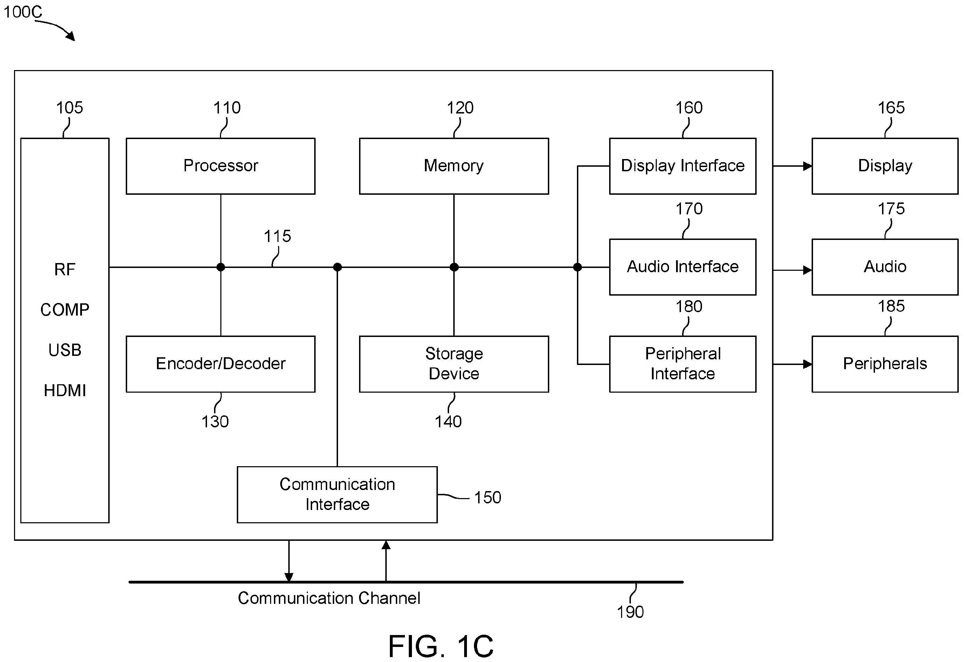

FIG. 1B illustrates a block diagram of an example of a system 100B in which various aspects and embodiments can be implemented. The system 100B includes the processor 110 and memory 120 as described in relation with FIG. 1A. The input to the elements of system 100B may be provided through various input devices as indicated in block 105 which is described further below with FIG. 1C. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1B, include composite video.

The various elements may be interconnected and transmit data therebetween using suitable connection arrangement 115, for example, an internal bus as known in the art, including the I2C bus, wiring, and printed circuit boards.

The system 100B includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

The system 100B may provide an output signal to various output devices, including a display, speakers, and other peripheral devices. The output devices may be communicatively coupled to system 100B via dedicated connections through respective interfaces 160, 170, and 180. Alternatively, the output devices may be connected to system 100B using the communications channel 190 via the communications interface 150.

FIG. 1C illustrates a block diagram of an example of a system 100C in which various aspects and embodiments can be implemented according to another embodiment. Elements of system 100C, singly or in combination, may be embodied in a single integrated circuit, multiple Ics, and/or discrete components. For example, in at least one embodiment, the processing and encoder/decoder elements of system 100C are distributed across multiple Ics and/or discrete components.

The system 100C includes the processor 110 and memory 120 as described in relation with FIG. 1A or 1B.

System 100C includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100C includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100C or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input data (image, video, volumetric content), the decoded data (image, video, volumetric content) or portions of the decoded data, the bitstream, matrices, variables, and intermediate or final results from the processing of equations, formulas, operations, and operational logic.

In some embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for data encoding and decoding operations, such as for MPEG-2, HEVC (HEVC refers to High Efficiency Video Coding, also known as H.265 and MPEG-H Part 2), or VVC (Versatile Video Coding also known as H.266, standard developed by JVET, the Joint Video Experts Team).

The input to the elements of system 100C may be provided through various input devices as indicated in block 105, also mentioned in FIG. 1B. Such input devices of system 100B or 100C include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1B or 1C, include composite video.

In various embodiments, the input devices of block 105 in system 100B or 100C have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which can be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100B or 100C to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the data stream as necessary for presentation on an output device.

Various elements of the systems 100A, 100B or 100C may be provided within an integrated housing, Within the integrated housing, the various elements may be interconnected and transmit data therebetween using the suitable connection arrangement 115, for example, an internal bus as known in the art, including the I2C bus, wiring, and printed circuit boards.

Similarly, as for the system 100B of FIG. 1B, the system 100C includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100B or 100C, in various embodiments, using a Wi-Fi network such as IEEE 802.11 (IEEE refers to the Institute of Electrical and Electronics Engineers). The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100B or 100C using a set-top box that delivers the data over the HDMI connection of the input block 105. Still other embodiments provide streamed data to the system 100B or 100C using the RF connection of the input block 105. As indicated above, various embodiments provide data in a non-streaming manner. Additionally, various embodiments use wireless networks other than Wi-Fi, for example a cellular network or a Bluetooth network.

The system 100C may provide an output signal to various output devices, including a display 165, speakers 175, and other peripheral devices 185. The display 165 of various embodiments includes one or more of, for example, a touchscreen display, an organic light-emitting diode (OLED) display, a curved display, and/or a foldable display. The display 165 can be for a television, a tablet, a laptop, a cell phone (mobile phone), or other devices. The display 165 can also be integrated with other components (for example, as in a smart phone), or separate (for example, an external monitor for a laptop). The other peripheral devices 185 include, in various examples of embodiments, one or more of a stand-alone digital video disc (or digital versatile disc) (DVR, for both terms), a disk player, a stereo system, and/or a lighting system. Various embodiments use one or more peripheral devices 185 that provide a function based on the output of the system 100C. For example, a disk player performs the function of playing the output of the system 100C.

In various embodiments, control signals are communicated between the system 100C and the display 165, speakers 175, or other peripheral devices 185 using signaling such as AV.Link, CEC, or other communications protocols that enable device-to-device control with or without user intervention. The output devices may be communicatively coupled to system 100C via dedicated connections through respective interfaces 160, 170, and 180. Alternatively, the output devices may be connected to system 100C using the communications channel 190 via the communications interface 150. The display 165 and speakers 175 may be integrated in a single unit with the other components of system 100C in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

In any of the systems 100A, 100B or 100C, the embodiments can be carried out by computer program product comprising code instructions that implements any one of embodiments described herein. The computer program product may be computer software implemented by the processor 110 or by hardware, or by a combination of hardware and software. As a non-limiting example, the embodiments can be implemented by one or more integrated circuits. The memory 120 of any one of the systems 100A, 100B or 100C can be of any type appropriate to the technical environment and can be implemented using any appropriate data storage technology, such as optical memory devices, magnetic memory devices, semiconductor-based memory devices, fixed memory, and removable memory, as non-limiting examples. The processor 110 of any one of the systems 100A, 100B or 100C can be of any type appropriate to the technical environment, and can encompass one or more of microprocessors, general purpose computers, special purpose computers, and processors based on a multi-core architecture, as non-limiting examples.

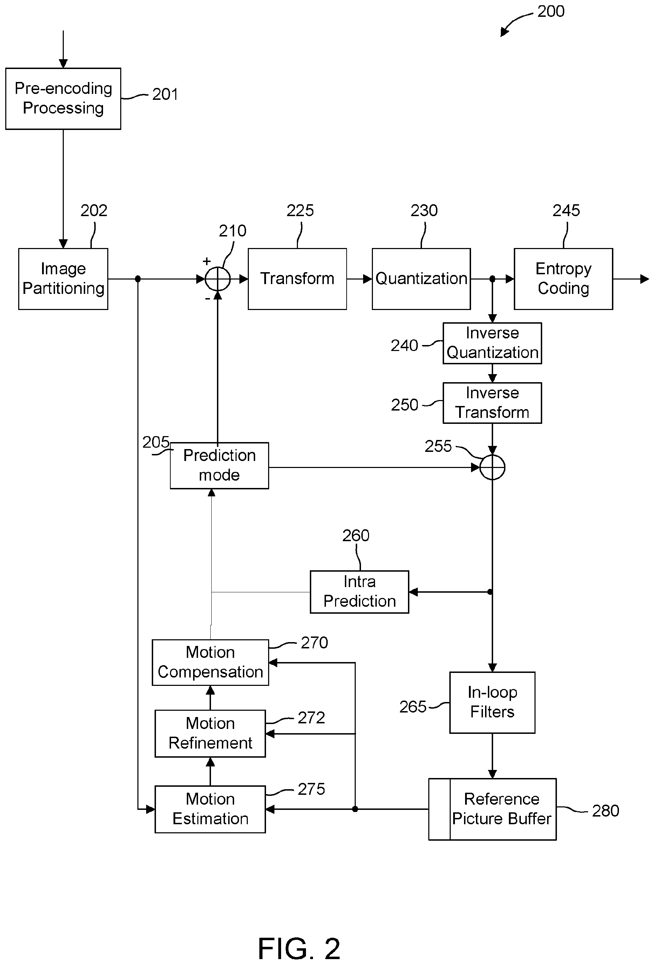

FIG. 2 illustrates an example of a block-based hybrid video encoder 200. Variations of this encoder 200 are contemplated, but the encoder 200 is described below for purposes of clarity without describing all expected variations.

In some embodiments, FIG. 2 also illustrate an encoder in which improvements are made to the HEVC standard or a VVC standard (Versatile Video Coding, Standard ITU- T H.266, ISO/IEC 23090-3, 2020) or an encoder employing technologies similar to HEVC or VVC, such as an encoder ECM (Enhanced Compression Model) under development by JVET (Joint Video Exploration Team).

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of color components), or re-sizing the picture (ex: down-scaling). Metadata can be associated with the pre-processing and attached to the bitstream.

In the encoder 200, a picture is encoded by the encoder elements as described below. The picture to be encoded is partitioned (202) and processed in units of, for example, CUs (Coding units) or blocks. In the disclosure, different expressions may be used to refer to such a unit or block resulting from a partitioning of the picture. Such wording may be coding unit or CU, coding block or CB, luminance CB, or block. A CTU (Coding Tree Unit) refers to a group of blocks or group of units or group of coding units (CUs). In some embodiments, a CTU may be considered as a block, or a unit as itself.

Each unit is encoded using, for example, either an intra or inter mode. When a unit is encoded in an intra mode, it performs intra prediction (260). In an inter mode, motion estimation (275) and compensation (270) are performed. The intra mode and/or the inter mode may comprise several distinct sub-modes. For example, the intra mode may comprise directional intra predictions, template-based intra mode derivation prediction, intra block copy prediction or others modes spatially predicting the samples values of the unit. The inter mode may comprise skip mode, merge mode according to which motion information is derived from a list of motion candidates and no motion vector prediction residual is encoded, an inter mode according to which motion information is derived from a list of motion candidates and further refined either by encoding motion vector prediction residual or by template-matching performed both at the encoder and the decoder, further inter modes are also possible. The encoder decides (205) which one of the intra mode or inter mode to use for encoding the unit. When different intra modes and/or inter modes are possible, the encoder decides (205) which of the intra modes or inter modes to use. The encoder indicates the intra/inter decision by, for example, one or more syntax element signaling the prediction mode. The encoder may also blend (205) intra prediction result and inter prediction result, or blend results from different intra/inter prediction methods. Prediction residuals are calculated, for example, by subtracting (210) the predicted block from the original image block.

The motion refinement module (272) uses already available reference picture in order to refine the motion field of a block without reference to the original block. A motion field for a region can be considered as a collection of motion vectors for all pixels with the region. If the motion vectors are sub-block-based, the motion field can also be represented as the collection of all sub-block motion vectors in the region (all pixels within a sub-block have the same motion vector, and the motion vectors may vary from sub-block to sub-block). If a single motion vector is used for the region, the motion field for the region can also be represented by the single motion vector (same motion vectors for all pixels in the region).

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes (reconstructs) an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, one or more of a deblocking filtering, an SAO (Sample Adaptive Offset) filtering or an ALF (Adaptive Loop Filter) filtering to reduce encoding artifacts. The filtered image is stored at a reference picture buffer (280). Such filtered image is also referred to as a reference image in the following.

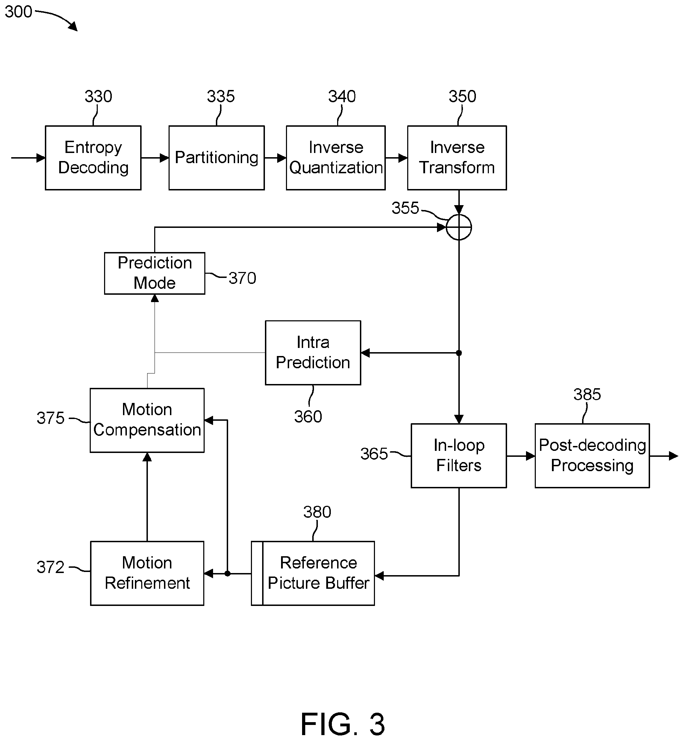

FIG. 3 illustrates a block diagram of a video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed.

The predicted block can be obtained (370) from intra prediction (360) or motion-compensated prediction (i.e., inter prediction) (375). In a similar manner as in the encoder, intra prediction and/or inter prediction may comprise several distinct sub-modes. The decoder obtains (370) the predictor block based on one or more syntax elements signaling the prediction mode among the available intra modes and inter modes. The decoder may blend (370) the intra prediction result and inter prediction result, or blend results from multiple intra/inter prediction methods. Before motion compensation, the motion field may be refined (372) by using already available reference pictures. In-loop filters (365) are applied to the reconstructed image. The filtered image is stored at a reference picture buffer (380). Note that, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201), or re-sizing the reconstructed pictures (ex: up-scaling). The post-decoding processing can use metadata derived in the pre-encoding processing and signaled in the bitstream.

Inter prediction information representation in video compression standards such as HEVC (*H.265: High efficiency video coding*), VVC (Versatile video coding », ITU-T H.266, TELECOMMUNICATION STANDARDIZATION SECTOR OF ITU, SERIES H: AUDIOVISUAL AND MULTIMEDIA SYSTEMS Infrastructure of audiovisual services - Coding of moving video, April 2022*).),* or in implementation such as in ECM implementation (Algorithm description of Enhanced Compression Model 11 (ECM 11) ",M. Coban, R.-L. Liao, K. Naser, J. Ström, L. Zhang, document JVET-AF2025, 32nd JVET Meeting, Hannover, DE, October 2023*)* are discussed below.

As stated above with regards to general block-based video codecs, some motion information is associated to each block coded in inter mode. This section briefly presents the block structure used in HEVC and VVC to represent a compressed picture, then it describes the motion representations that can be assigned to an inter block.

Block structure in HEVC

This section describes the block structure used in HEVC to represent compressed pictures.

In the state-of-the-art video compression systems, a picture is divided into so-called Coding Tree Units (CTU), which size is typically 64x64, 128x128, or 256x256 pixels. Each CTU is represented by a Coding Tree in the compressed domain. In the HEVC standard, this consists in a quad-tree division (QT) of the CTU, where each leaf is called a Coding Unit (CU).

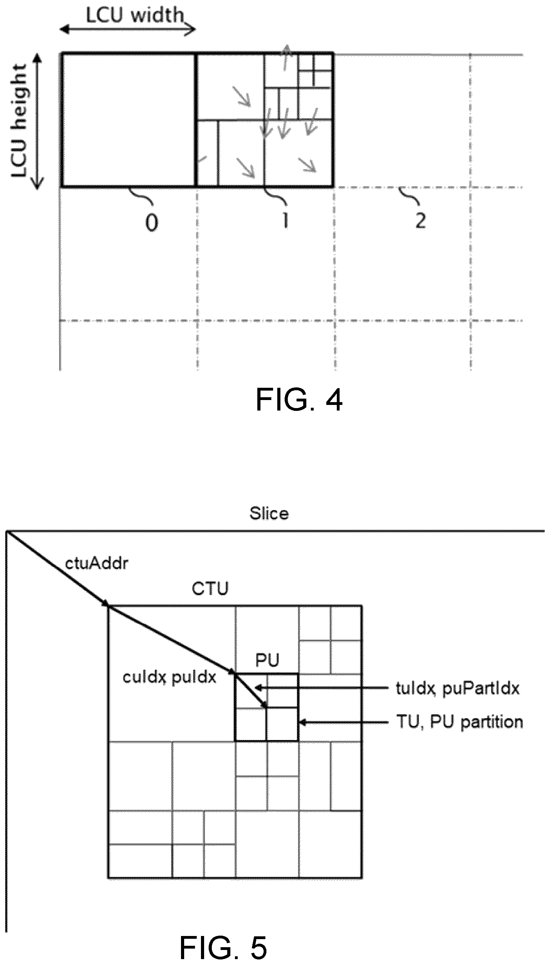

Each CU is then given some Intra or Inter prediction parameters (Prediction Info). To do so, it is spatially partitioned into one or more Prediction Units (PUs), each PU being assigned some prediction information. The Intra or Inter coding mode is assigned on the CU level. Examples of CTU and CU partitioning into PU are illustrated by FIG. 4 and 5.

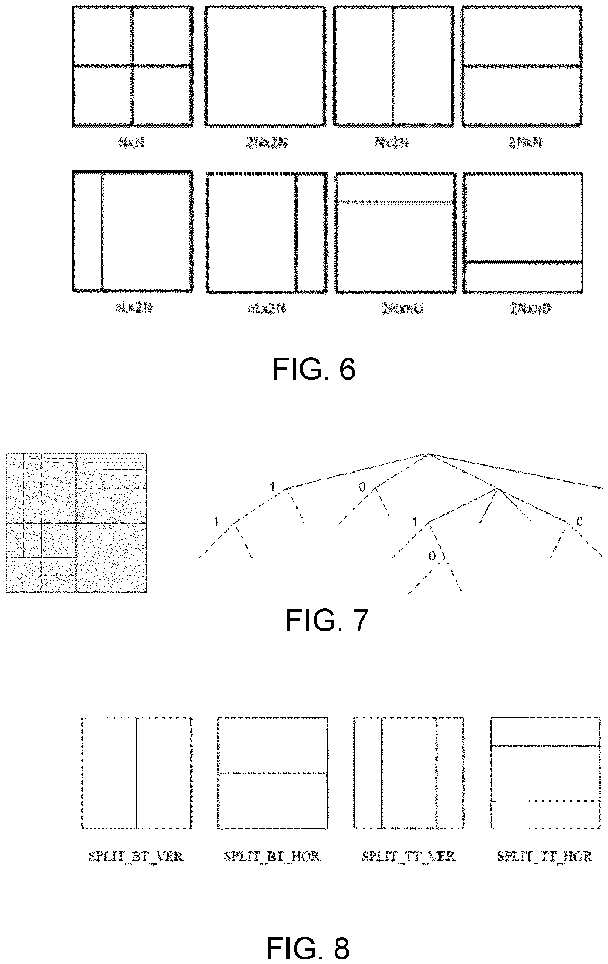

The Partition types existing in HEVC are illustrated on FIG. 6. They include square partitions (2N×2N and N×N), which are the only ones used in both Intra and Inter CUs, symmetric non-square partitions (2N×N, N×2N, used only in Inter CUs), and asymmetric Partitions (used only in Inter CUs).

Block structure in VVC

This section describes the block structure used in VVC standard to represent compressed pictures. In VVC, a picture is divided in square CTUs as in HEVC. A CTU in HEVC may be of size 32x32, 64×64 or 128×128. The CTU division of a picture thus forms a regular grid, which upper and left bounds spatially coincide with the top and left border of the picture. Each CTU is split into coding units according to a so-called coding tree as illustrated by FIG. 7. The coding tree is made of two stages:

A CTU is first partitioned by a quaternary tree (or quad-tree/QT). A quad-tree split divides a coding tree node corresponding to a square picture block into 4 nodes corresponding to 4 sub-blocks of equal sizes (see solid lines of FIG. 7).

The quad-tree leaves can then be further partitioned by a so-called multi-type tree (MTT), which involves 4 split types (or split modes), illustrated on FIG. 8. These split types are the vertical and horizontal binary split (BT) modes, noted SPLIT_BT_VER and SPLIT_BT_HOR and the vertical and horizontal ternary split (TT) modes SPLIT_TT_VER and SPLIT_TT_HOR. A binary split divides a block into two sub-blocks, with half size of the parent block, according to the split orientation. A ternary split divides a block into 3 sub-blocks, with sizes respectively equal to ¼, 1/2 and ¼ of the parent block, in the considered split orientation.

An exemplary CTU division according to VVC is illustrated by FIG. 7. The leaves of the coding tree of a CTU are the coding unit(s), in the case of a joint coding shared by luma and chroma component.

In intra picture, separated coding trees may be used, for luma component on one side and chroma components on the other side. The luma component part of a CTU is called a luma coding tree block. A luma coding tree block (CTB) is then associated to a coding tree, which leaves are associated to luma coding blocks. Furthermore, in the case of separated luma/chroma coding trees and a 3 components picture, the two chroma CTB share the same coding tree.

Contrary to HEVC, in VVC, in most cases, CU, PU and TU have equal size, which means coding units are generally not partitioned into PU or TU, except in some specific coding modes.

Inter prediction information representation and coding in HEVC

In HEVC video standard, a coding unit coded in inter mode employs one or several motion vectors respectively assigned to each PU in the CU, as explained above. The coding of this motion information is performed according to the so-called AMVP mode (Adaptive Motion Vector Prediction) or the Merge mode.

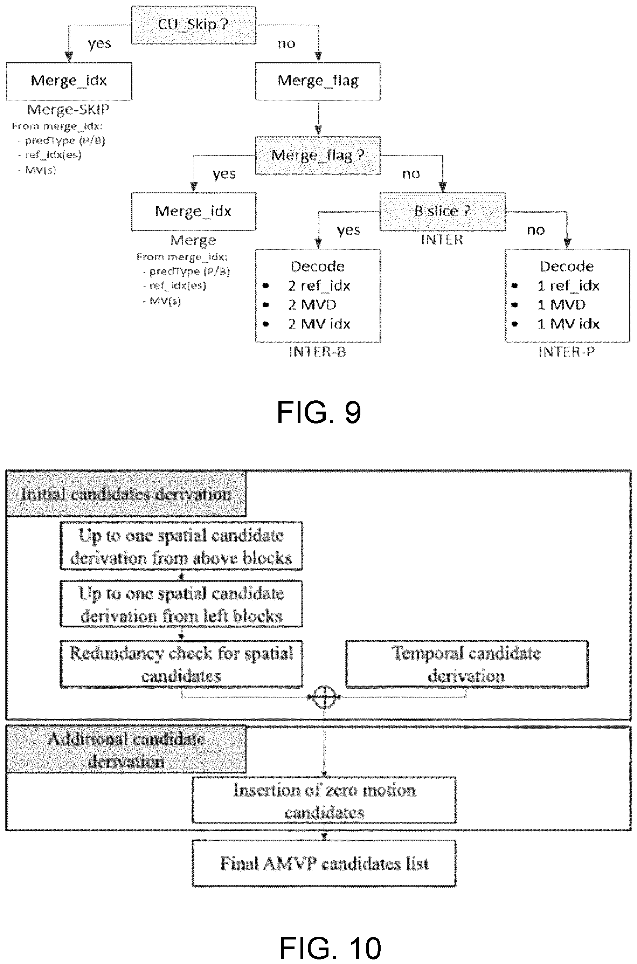

The coding and decoding of inter prediction information in HEVC is summarized on FIG. 9 illustrating an example of signaling of the inter prediction information according to the HEVC specification. As can be seen, 3 main modes for coding inter predictions parameters exist: skip merge mode, non-skip merge mode and AMVP mode. The skip and merge modes are signaled through 2 dedicated flags. AMVP mode is on when these two flags are false.

The following table summarize differences between AMVP, merge and skip modes of inter coded CU in HEVC.

| Mode/explicit MV info | Pred type (P/B) | Ref pic list idx | MVPred idx | MVdiff | Merge idx | Residual |
|---|---|---|---|---|---|---|
| **AMVP** | X | X | X | X | | X (0/1) |
| **Merge** | | | | | X | X |
| **Skip** | | | | | X | |

The merge index enables the derivation of the prediction type (P or B picture), the reference picture list index and the associated motion vectors.

AMVP mode of HEVC

In the AMVP mode of HEVC, the up-to-2 reference pictures used to temporally predict a considered PU are explicitly signaled, as well as the motion vectors associated to each PU and each reference picture.

These motion vectors are predictively coded. This means a motion vector predictor (MVP) is chosen by the encoder for each reference picture and a motion vector difference noted MVd relative to each selected MVP is signaled as well. The decoder side reconstructed motion data then consists in the sum of the MVPs used for a given PU and their associated MVds.

The MVP are chosen in an AMVP candidate list made of 2 elements for each reference picture, and the index of the chosen MVP is signaled in the bit-stream. This MVP candidate list can be constructed according to the workflow illustrated on FIG. 10 showing MVP candidate list construction in AMVP mode of HEVC.

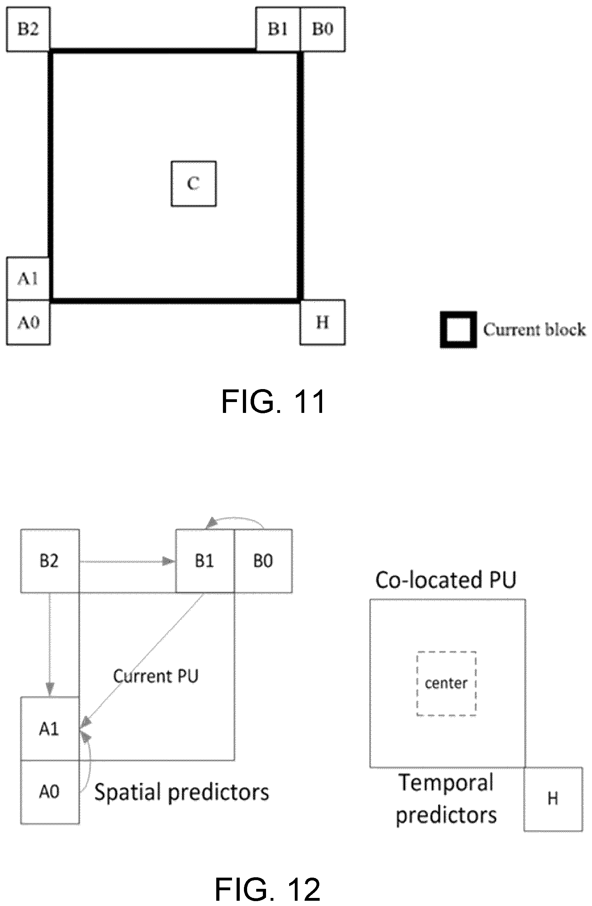

More precisely, a candidate MVP from left neighboring position A0, A1 (see FIG. 11) is derived if an inter coded block exists at the corresponding spatial location. An MVP from top neighboring block is derived, then a temporal MVP is derived, from a reference picture at spatial position H if available, or position C otherwise. A derived MVP is scaled according to the temporal distances between the reference picture associated to the MVP and the current reference picture being considered. A redundancy check is conducted between derived spatial MVPs, i.e. duplicate derived MVP are discarded. The final AMVP candidate list contains the two first derived MVP candidates. If less than 2 MVP candidates are obtained through the above process, then the AMVP candidate list is completed with zero motion vectors.

Principle of the merge mode in HEVC

The motion information encoding/decoding according to the merge mode takes place in two modes: the skip mode and the merge mode. In these two modes, one single field is being signaled to make the decoder able to retrieve the motion information of a PU: the so-called merge index. The merge index indicates which Motion Vector Predictor (MVP) in the list of merge motion information predictor is used to derive the motion information of current PU. In the following, the list of motion information predictors is called the merge list, or merge candidate list. Moreover, a candidate motion information predictor is called a merge candidate.

This section presents the principle of the merge mode in the HEVC standard. The merge mode consists in deriving the inter prediction information (also called motion information in the following) of a given prediction unit from a selected motion information predictor candidate. The motion information considered here includes all the inter prediction parameters of a PU, that is to say:

The uni-directional or bi-directional temporal prediction type

The reference picture index within each reference picture list

The motion vector(s)

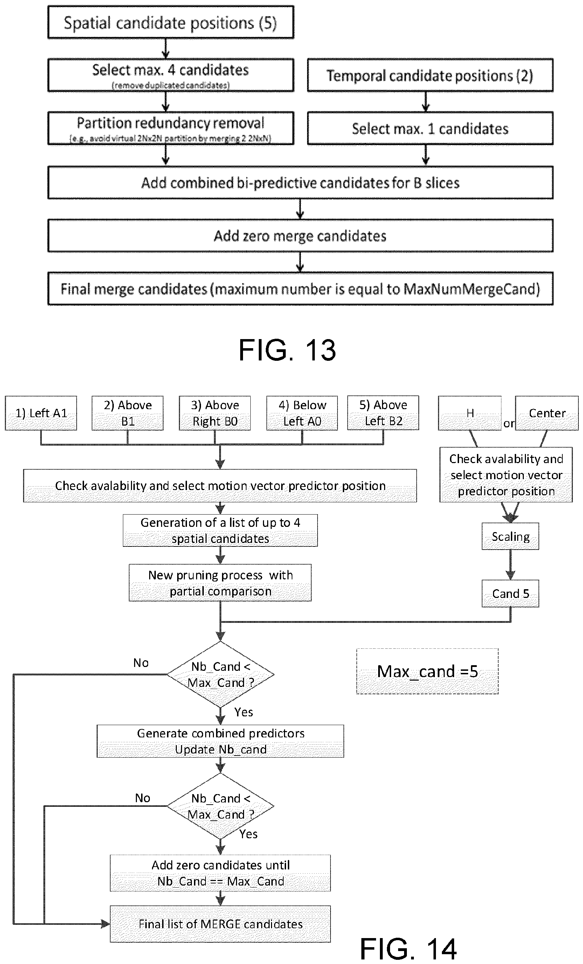

In HEVC the merge candidate list is systematically made of 5 merge candidates. The following of this section describes how the merge list is constructed, both on the encoder and on the decoder sides. As can be seen, up to 5 spatial positions are considered to retrieve some potential candidates. They are visited according to the following order: 1. Left (A1), 2. Above (B1), 3. Above right (B0), 4. Left bottom (A0), 5. Above left (B2), where the symbols A0, A1, B0, B1, B2 denote the spatial position shown on FIG. 12. Four spatial candidates which associated motion information are different from each other are selected. Then a temporal predictor noted TMVP is selected by considering the temporal motion information located at position H, and then "center" is candidate at position H if the considered reference picture is not available. A last pruning process then takes place (see FIG. 13), to ensure the selected set of spatial and temporal candidates does not contain redundant candidate.

Next, in the case of a B slice, candidates of another type are pushed to the merge list if it is not full: the so-called combined candidates. This consists in forming a candidate made of the motion information associated to one reference picture list (L0) from one candidate already present in the merge list, with the motion associated to the other reference picture list (L1) from another candidate already present in the merge list.

Finally, if the merge list is still not full (5 elements) then zero motion vectors are pushed to the back of the merge list until it is full.

An example of the overall process of merge list construction in HEVC is detailed on the diagram of FIG. 14.

Inter prediction information representation and coding in VVC

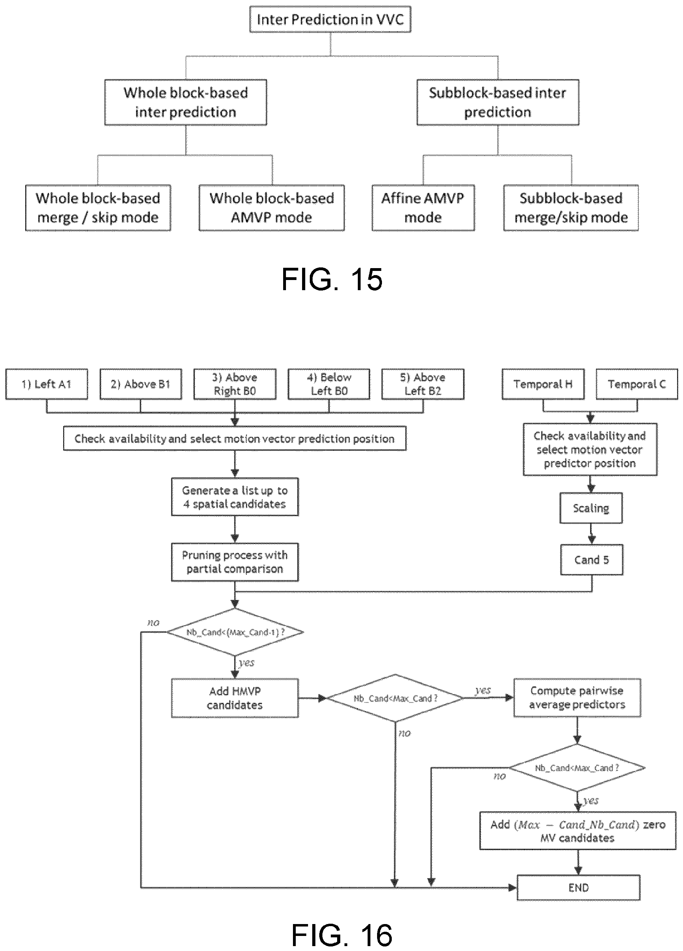

In VVC, the motion data representation is richer than in HEVC. It can be divided into 2 main categories: whole-block-based motion representation and sub-block-based motion representation, as illustrated by FIG. 15. In each category, two modes for coding the motion information can be used, which are merge/skip and AMVP, similarly to HEVC.

The whole-block-based motion representation basically consists in assigning one set of motion information, made of one or two motion vectors and associated reference picture(s) to an inter block. Thus, the motion information of that block is represented under the form of a single motion vector for the whole block.

On the other hand, sub-block-based motion coding mode typically divides a block into 4x4 or 8x8 luma samples subblocks and assigns an individual set of motion information to each subblock.

Whole-block-based motion representation and coding in VVC

Whole-block-based AMVP mode in VVC

The AMVP mode of VVC is similar to that of HEVC, it explicitly signals the Motion Vector as a MV Difference relative to a selected MVP for a given reference picture, together with the reference picture index that identifies the reference picture associated to the coded motion vector. The AMVP motion vector predictor (MVP) candidate list in VVC is made of exactly two elements as in HEVC, and the following elements are employed to construct it on the encoder and decoder sides: Up to 4 spatial candidates as in HEVC, Up to 1 temporal MVP candidate as in HEVC, Up to 4 HMVP (History-Based Motion Vector Prediction) candidate, Zero motion vector if needed to get 2 MVP candidate in the final list.

HMVP candidates are new in VVC. The principle of HMVP is to use previously coded MV as MVPs which are associated with adjacent or non-adjacent blocks relative to current block. To do so, a table of HMVP candidates is maintained at both encoder and decoder sides and updated on the fly, as a first-in-first-out (FIFO) buffer of MVPs. There are up to five candidates in the HMVP table. After coding one inter predicted block which is not in sub-block mode (including affine mode) or GPM (geometric partition mode), the table is updated by appending the associated motion information to the end of the table as a new HMVP candidate. The FIFO (First In First Out) rule is applied to manage the table wherein, in addition to the FIFO mechanism, the redundant candidate in the HMVP table is firstly removed instead of the first one. The table is reset at each CTU row to enable parallel processing.

Aside from the AMVP candidate list, the whole-block-based AMVP motion coding mode of VVC employs new tools compared to HEVC which are listed below:

SMVD (Symmetric Motion Vector Difference). SMVD consists in setting the MVD associated to reference picture list 1 (L1) equal to the opposite of the MVD associated to reference picture list 0 (L0) for a given block. Moreover, the reference pictures used in SMVD mode are derived by the decoder with some pre-defined rules. SMVD enables reducing the rate cost for coding MVD information and is selected at block level.

AMVR (Adaptive Motion Vector Resolution). The AMVR tool allows signaling the MVD with quarter-pel, half-pel, integer-pel or 4-pel luma sample resolutions. This allows saving bits in the coding of MVD information also. In AMVR, the motion vector resolution is chosen at block level.

BCW (Bi-prediction with coding unit weights) enables bi-prediction of a block with unequal weights, signaled at block (CU) level.

Finally, the internal motion vector representation in the VVC codec is achieved at 1/16-luma sample accuracy, instead of ¼-luma sample accuracy in HEVC.

Whole-block-based merge modes in VVC

The whole-block-based merge mode in VVC, also called regular merge mode, has a different merge MVP candidate list construction from HEVC, and introduces 3 new merge coding modes, which are MMVD (Merge Mode with MV Difference), GPM (Geometric Partitioning Mode) and CIIP (Combined Intra/Inter Prediction).

The merge MVP candidate list is constructed with the following types of MVP candidates:

Spatial candidates: They are similar to HEVC except the two first candidates are swapped.

Temporal MVP candidates are similar to HEVC.

HMVP candidates: Several HMVP candidates are inserted into the merge list so that the merge list reaches the maximum allowed number of MVP candidates minus 1.

Pairwise Average candidates: Up to one pairwise average candidate is added to the merge candidate list. Pairwise candidates are computed as follows. The two first MVP candidates present in the list are considered and their motion vectors are averaged. This averaging is computed separately for each reference picture list. So, if both MVP are bi-direction ones, motion vectors related to both lists L0 and L1 are averaged. If only one motion vector is present in a reference picture list, it is taken as is to form the pairwise candidate.

Zero MV candidates

An example of a whole-block-based (or non-subblock-based) merge list construction process of VVC is illustrated by FIG. 16.

MMVD (Merge mode with MV Differences) merge mode

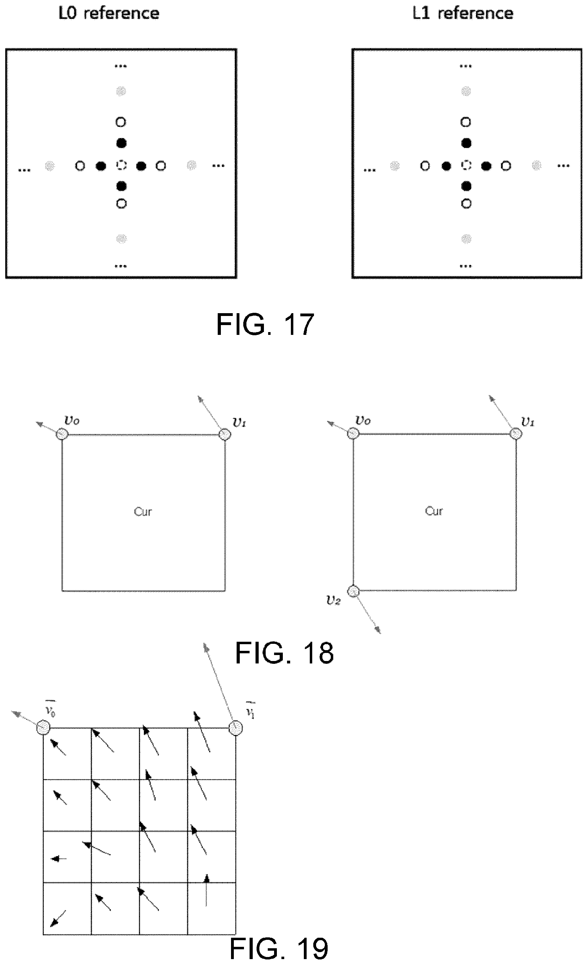

The MMVD mode allows coding a limited motion vector difference (MVd) on top of a selected merge MVP candidates, to represent the motion information of a CU. MMVD coding is limited to 4 vector directions illustrated on FIG. 17, and 8 magnitude values, from ¼ luma sample to 32-luma sample. MMVD provides an intermediate accuracy level, hence an intermediate trade-off between rate cost and MV accuracy to signal the motion information.

Sub-block-based motion representation and coding in VVC

Affine motion compensation in VVC

In HEVC, only translation motion model is applied for motion compensated temporal prediction (MCP). Such translational motion is not able to capture some types of motion like zoom in, zoom out, rotation, perspective motions and irregular motions. In VVC, a sub-block-based affine motion compensation prediction can be used at CU level. As shown on FIG. 18, the affine motion field of the block is described by motion information of two control point motion vectors (4-parameter affine motion model) or three control point motion vectors (6-parameter affine motion model). On FIG. 18, the vectors $v_0$, $v_1$, $v_2$, are the control point motion vectors (CPMVs) associated to the block and used to represent the affine motion field of the considered block.

For the 4-parameter affine motion model, motion vector at sample location (x, y) in a block is derived as:

$$\begin{cases} mv_x = \dfrac{mv_{1x} - mv_{0x}}{W} x + \dfrac{mv_{0y} - mv_{1y}}{W} y + mv_{0x} \\ mv_y = \dfrac{mv_{1y} - mv_{0y}}{W} x + \dfrac{mv_{1x} - mv_{0x}}{W} y + mv_{0y} \end{cases}$$

Equation 1: 4-parameter affine motion field computation

For the 6-parameter affine motion model, motion vector at sample location (x, y) in a block is derived as:

$$\begin{cases} mv_x = \dfrac{mv_{1x} - mv_{0x}}{W} x + \dfrac{mv_{2x} - mv_{0x}}{H} y + mv_{0x} \\ mv_y = \dfrac{mv_{1y} - mv_{0y}}{W} x + \dfrac{mv_{2y} - mv_{0y}}{H} y + mv_{0y} \end{cases}$$

Equation 2: 6-parameter affine motion field computation

where (mv0x, mv0y) is the motion vector of the top-left corner control point, (mv1x, mv1y) is the motion vector of the top-right corner control point, and (mv2x, mv2y) is the motion vector of the bottom-left corner control point.

In VVC, affine motion compensation is performed on a 4x4 subblock basis. To derive motion vector of each $4 \times 4$ luma subblock, the motion vector of the center sample of each subblock according to above equations, as shown in FIG. 19, is calculated according to above equations, and rounded to 1/16 fraction accuracy. Then the motion compensation interpolation filters are applied to generate the prediction of each subblock with derived motion vector. The subblock size in chroma-components is also $4 \times 4$. The MV of a $4 \times 4$ chroma subblock is calculated as the average of the MVs of the top-left and bottom-right luma subblocks in the collocated 8x8 luma region.

As for translational motion inter prediction, there are two main affine inter prediction modes in VVC: affine AMVP mode and affine merge mode. They are introduced in the following.

Affine Merge mode

The affine merge mode is a particular subblock-based motion coding mode inside the sub-block merge mode. It can be applied for CUs with both width and height larger than or equal to 8. In this mode the CPMVs of the current CU are generated based on the motion information of the spatial neighboring CUs. There can be up to five CPMVP (Control Point Motion Vector Predictors) candidates and an index is signaled to indicate the one to be used for the current CU. The following three types of CPVM candidate are used to form the affine merge candidate list:

Inherited affine merge candidates extrapolated from the CPMVs of the neighbor CUs

Constructed affine merge candidates CPMVPs that are derived using the translational MVs of the neighbor CUs

Zero MVs

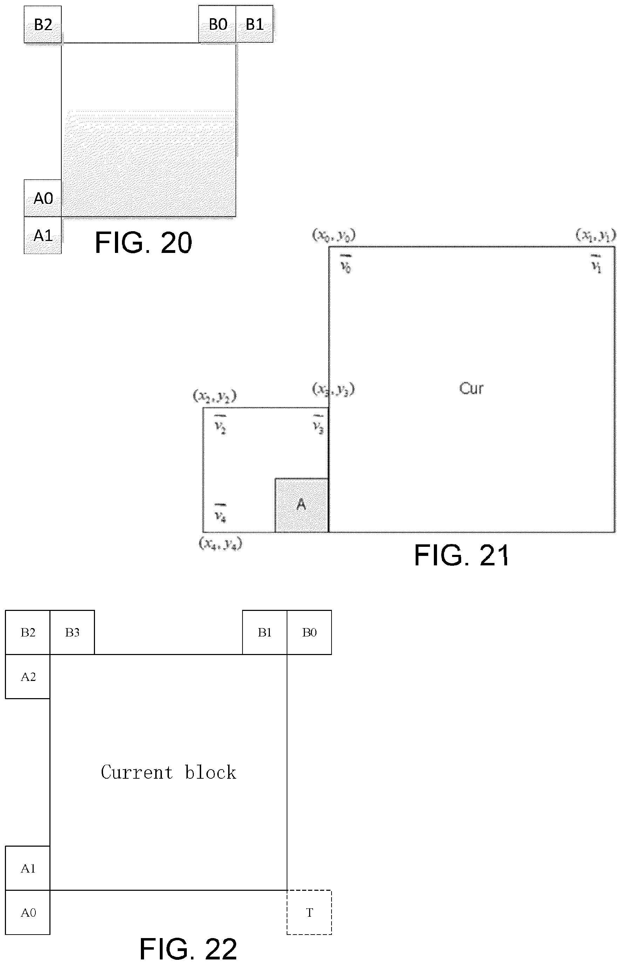

In VVC, there are maximum two inherited affine candidates, which are derived from affine motion model of the neighboring blocks, one from left neighboring CUs and one from above neighboring CUs.
The candidate blocks are shown in FIG. 20. For the left predictor, the scan order is A0->A1, and for the above predictor, the scan order is B0->B 1->B2. Only the first inherited candidate from each side is selected. When a neighboring affine CU is identified, its control point motion vectors are used to derive the CPMVP candidate in the affine merge list of the current CU. As shown in FIG. 21, if the neighbor left bottom block A is coded in affine mode, the motion vectors $v_2$, $v_3$, and $v_4$ of the top left corner, above right corner and left bottom corner of the CU which contains the block A are attained. When block A is coded with 4-parameter affine model, the two CPMVs of the current CU are calculated according to $v_2$, and $v_3$. In case that block A is coded with 6-parameter affine model, the three CPMVs of the current CU are calculated according to $v_2$, $v_3$, and $v_4$.
Constructed affine candidate means the candidate is constructed by combining the neighbor translational motion information of each control point. The motion information for the control points is derived from the specified spatial neighbors and temporal neighbor shown in FIG. 22. CPMVk (k=1, 2, 3, 4) represents the k-th control point. For CPMV1, the B2->B3->A2 blocks are checked and the MV of the first available block is used. For CPMV2, the B1->B0 blocks are checked and for CPMV3, the A1->A0 blocks are checked. TMVP is used as CPMV4 if it's available.

After MVs of four control points are attained, affine merge candidates are constructed based on those motion information. The following combinations of control point MVs are used to generate constructed affine merge candidate, in order:

{CPMV1, CPMV2, CPMV3}, {CPMV1, CPMV2, CPMV4}, {CPMV1, CPMV3, CPMV4}, {CPMV2, CPMV3, CPMV4}, { CPMV1, CPMV2}, { CPMV1, CPMV3}

This means, for instance, that if control point motion vectors {CPMV1, CPMV2, CPMV3} are used, then they are used to generate an affine motion field for the CU, following Equation 2.

The combination of 3 CPMVs as above constructs a 6-parameter affine merge candidate and the combination of 2 CPMVs constructs a 4-parameter affine merge candidate. To avoid motion scaling process in case CPMVs point to different reference pictures, if the reference indices of control points are different, the related combination of control point MVs is discarded.

After inherited affine merge candidates and constructed affine merge candidate are considered for being appended to the affine merge candidate list, if the list is still not full, zero MVs are inserted to the end of the list.

Affine AMVP mode

Affine AMVP mode can be applied for CUs with both width and height larger than or equal to 16. An affine flag at CU level is signaled in the bitstream to indicate the use of affine AMVP mode. Another flag signals if 4-parameter affine or 6-parameter affine model is used. In affine AMVP mode, the difference of the CPMVs of current CU and their predictors CPMVPs (Control Point Motion Vector Predictors) is coded.

The CPMVPs used to predict the CPMV of a CU are taken from an affine AMVP candidate list made of 2 elements. The affine AMVP candidate list is constructed using the following four types of CPVM candidate in order: Inherited affine AMVP candidates extrapolated from the CPMVs of the neighbor CUs, Constructed affine AMVP candidates CPMVPs that are derived using the translational MVs of the neighbor CUs, Translational MVs from neighboring CUs, Zero MVs.

In the following the term checking is used. Checking a potential candidate means checking that a valid Affine AMVP or Affine merge candidate to predict the current CU's affine CPMVs is available and is valid, and if so, add it to the candidate list under construction.

The checking order of inherited affine AMVP candidates is same to the checking order of inherited affine merge candidates. The only difference is that, for AVMP candidate, only the affine CU that has the same reference picture as in current block is considered. No pruning process is applied when inserting an inherited affine motion predictor into the candidate list.

Constructed affine AMVP candidate is derived from the specified spatial neighbors shown in FIG. 22. The same checking order is used as in affine merge candidate construction. In addition, reference picture index of the neighboring block is also checked. The first block in the checking order that is inter coded and has the same reference picture as in current CUs is used.

When the current CU is coded with 4-parameter affine mode, and $mv_0$ and $mv_1$ are both available, they are added as one candidate in the affine AMVP list. When the current CU is coded with 6-parameter affine mode, and all three CPMVs are available, they are added as one candidate in the affine AMVP list. Otherwise, constructed AMVP candidate is set as unavailable.

If affine AMVP list of candidates is still less than 2 after valid inherited affine AMVP candidates and constructed AMVP candidate are inserted, $mv_0$, $mv_1$ and $mv_2$ are added, in order, as the translational MVs to predict all control point MVs of the current CU, when available. Finally, zero MVs are used to fill the affine AMVP list if it is still not full.

Sub-block-based merge/skip mode

The sub-block merge/skip mode of VVC is a merge mode using a merge candidate list of at most 5 elements with only subblock-based motion candidates. As for regular merge, a merge index indicates the subblock-based merge candidate used to derive the motion data of a CU. This subblock-based merge candidate list is made of the following elements. The SbTMVP (Subblock-based Temporal Motion Vector Prediction) candidate is put at first place. Then, affine merge candidates are put in the list. As a result, the subblock merge list is constructed with the following list of candidates: SbTMVP, Inherited affine merge candidates, Constructed affine merge candidates CPMVPs that are derived using the translational MVs of the neighbor CUs, Zero MVs.

The basic principle of SbTMVP is as follows. Similar to the TMVP regular merge candidate, SbTMVP uses the motion field in the collocated picture. SbTMVP differs from TMVP in the following two main aspects:
TMVP predicts motion at CU level, but SbTMVP predicts motion at sub-CU level;

Whereas TMVP fetches the temporal motion vectors from the collocated block in the collocated picture, SbTMVP applies a motion shift before fetching the temporal motion information from the collocated picture, where the motion shift is obtained from the motion vector from one of the spatial neighboring blocks of the current CU.

In the Enhanced Compression Model (ECM), developed by the Joint Video Expert Team, some new modes for motion representation are introduced on top of the VVC codec design. They are briefly listed in this section.

Recent advances in the representation of inter prediction data

Non-adjacent spatial merge candidates (NASMVP)

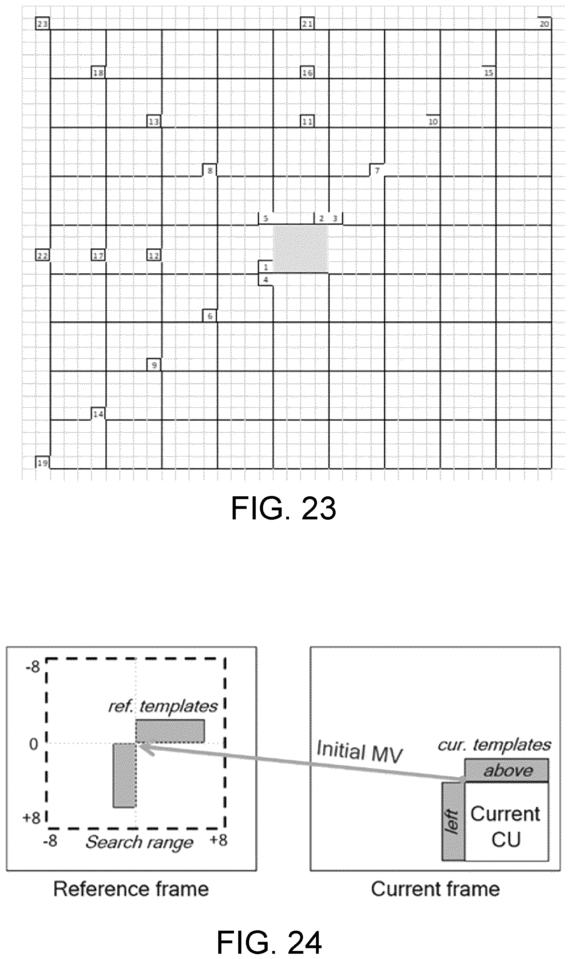

Non-adjacent spatial MV predictor candidates are added to the regular merge list, behind the TMVP merge candidate. Spatial locations of these added merge candidate are shown by FIG. 23.

Template Matching (TM)

Template matching is a decoder side motion vector refinement method. It refines a CU's motion vector by matching a template region above and on the left of current CU with a template in a search area in the reference picture. As illustrated by FIG. 24, a better MV is searched around the initial MV of current CU within a [- 8, +8]-pel search range. The refined MV is obtained by minimizing a so-called template matching cost between the template around current CU and candidate templates in reference picture.

In ECM, the TM (Template Matching) technique is also used to determine some MVP candidates in regular AMVP and regular merge modes. In particular, in AMVP, the MVP candidates are determined according to the template matching error. The MVP candidate with minimum TM cost is selected and further refined through TM.

Adaptive reordering of merge candidates with template matching (ARMC-TM)

In regular merge mode, affine merge mode and template matching merge mode (merge mode where TMP (Template Matching Predictor) refinement is applied), the merge candidates are reordered based on their TM cost. The TM cost is computed as the SAD (Sum of Absolute Difference) between the samples of the template of current block and their corresponding reference samples.

Multi-hypothesis prediction (MHP)

In the multi-hypothesis inter prediction mode, one or more additional motion-compensated prediction signals are signaled, in addition to the conventional bi prediction signal. The resulting overall prediction signal is obtained by sample-wise weighted superposition. With the bi prediction signal $p_{bi}$ and the first additional inter prediction signal/hypothesis $h_3$, the resulting prediction signal $p_3$ is obtained as follows: $p_3 = (1 - \alpha)p_{bi} + \alpha h_3$

The motion parameters of each additional prediction hypothesis can be signaled either explicitly by specifying the reference index, the motion vector predictor index, and the motion vector difference, or implicitly by specifying a merge index. A separate multi-hypothesis merge flag distinguishes between these two signaling modes.

GPM with MMVD

In ECM, GPM is extended by applying motion vector refinement on top of the existing GPM uni-directional MVs. A flag is first signaled for a GPM CU, to specify whether this mode is used. If the mode is used, each geometric partition of a GPM CU can further decide whether to signal MVD or not. If MVD is signaled for a geometric partition, after a GPM merge candidate is selected, the motion of the partition is further refined by the signaled MVDs information.

GPM with TM

Template matching is applied to GPM. When GPM mode is enabled for a CU, a CU-level flag is signaled to indicate whether TM is applied to both geometric partitions. Motion information for each geometric partition is refined using TM. When TM is chosen, a template is constructed using left, above or left and above neighboring samples according to partition angle.

Bilateral matching AMVP-merge mode (BM-AMVP-merge)

ECM finally comprises a new mode to represent a CU motion data, which basically consists in an AMVP motion predictor in one inter direction, i.e. associated to one reference picture list, and a merge mode in the opposite direction, i.e. associated to the other reference picture list.

This MV refinement mode is allowed in the case where the selected merge predictor and the AMVP predictor are such that there is at least one reference picture available in the past and one reference picture available in the future.

AMVP part of the mode is signaled as a regular uni-directional AMVP, i.e. reference index and MVD are signaled, and it has a derived MVP index if template matching is used or MVP index is signaled when template matching is disabled.

For AMVP direction (i.e. reference picture list) LX, X can be 0 or 1, the merge part in the other direction (1 - LX) is implicitly derived by minimizing the bilateral matching (BM) cost between the AMVP predictor and a merge predictor, i.e. for a pair of the AMVP and a merge motion vectors. For every merge candidate in the merge candidate list which has that other direction (1 - LX) motion vector, the bilateral matching cost is calculated using the merge candidate MV and the AMVP MV. The merge candidate with the smallest cost is selected. The bilateral matching refinement is applied to the coding block with the selected merge candidate MV and the AMVP MV as a starting point.

The following section briefly explains the principle of bilateral matching motion vector refinement.

Bilateral matching MV refinement

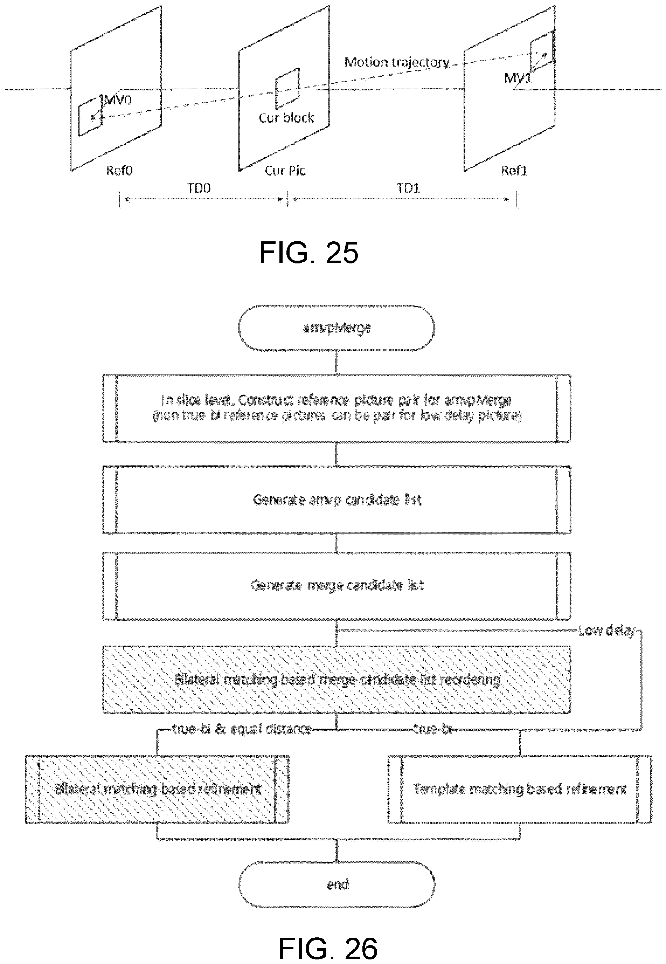

In bi-prediction operation of the ECM, a refined MV is searched around the two initial MVs (MV0 and MV1) in the reference picture lists L0 and L1, as illustrated by FIG. 25. The refined MVs are derived around the initial MVs based on the minimum bilateral matching cost between the two reference blocks in L0 and L1.

BM performs local search to derive integer sample precision intDeltaMV. The local search applies a 3×3 square search pattern to loop through the search range [-sHor, sHor] in horizontal direction and [-sVer, sVer] in vertical direction.

The bilateral matching cost is calculated as: bilCost = mvDistanceCost + sadCost, where mvDistanceCost is representative of the motion vector coding cost and increases as a function of the MV magnitude. When the bilCost at the center point of the 3×3 search pattern has the minimum cost, the intDeltaMV local search is terminated. Otherwise, the current minimum cost search point becomes the new center point of the 3×3 search pattern and continue to search for the minimum cost, until it reaches the end of the search range.

The existing fractional sample refinement is further applied to derive the final deltaMV. The refined MVs after the first pass is then derived as:

$$MV0\_pass1 = MV0 + deltaMV$$

$$MV1\_pass1 = MV1 - deltaMV$$

Support of AMVP-merge mode in low-delay configuration

The BM-AMVP-merge mode presented above, also called MVP-merge mode, is initially only proposed for B picture which have at least one reference picture in the past and at least one reference picture in the future, in terms of picture display order.

In more recent version (e.g. 9) of ECM, it is possible to activate the AMVP-Merge mode introduced above in low-delay pictures. An inter coded picture is said to be low-delay if its both reference picture are in the past of current picture, i.e. have Picture Order Count (POC, i.e. picture index in display order) lower than the POC of current picture.

To do so, it proposed to allow AMVP-Merge for low-delay pictures, by removing the bilateral matching reordering and refinement from the AMVP-Merge prediction mode. An example of the process is illustrated on FIG. 26.

Therefore, the following aspects are applied in ECM-9.0:

The amvpMerge is enabled for a bi-predicted block even the reference picture pair is not true bi-directional pictures for low-delay case. Additionally, the restriction condition on the resampled, long-term and WP reference picture are relaxed for low-delay picture cases.

To deactivate bilateral matching reordering in low-delay blocks (block with has its 2 references picture in the past or in the future), BM cost of an amvpMerge candidate which is not true bi-direction is set to be the maximum value during merge candidate reordering.

Support of AMVP-merge mode in affine motion representation mode

AMVP-Merge mode is also upported for affine blocks . Like the AMVP-Merge mode in ECM-9.0, it signals reference picture list index, reference picture index and MVP index to indicate the AMVP predictor. The merge candidate is derived by using ARMC reordering. A flag is signaled to indicate an AMVP-merge block is affine coded block or not when the block size is equal or greater than $8\times 8$ and the current picture is not a low-delay picture.

Adaptive Reordering of motion vector prediction candidates in ECM

Adaptive reordering of merge candidates with template matching (ARMC-TM)

The merge candidates are adaptively reordered with template matching (TM). The reordering method is applied to regular merge mode, TM merge mode, and affine merge mode (excluding the SbTMVP candidate). For the TM merge mode, merge candidates are reordered before the refinement process.

An initial merge candidate list is firstly constructed according to given checking order, such as spatial, TMVPs, non-adjacent, HMVPs, pairwise, virtual merge candidates. Then the candidates in the initial list are divided into several subgroups. For the template matching (TM) merge mode, adaptive DMVR mode, each merge candidate in the initial list is firstly refined by using TM/multi-pass DMVR. Merge candidates in each subgroup are reordered to generate a reordered merge candidate list and the reordering is according to cost values based on template matching. The index of selected merge candidate in the reordered merge candidate list is signaled to the decoder. For simplification, merge candidates in the last but not the first subgroup are not reordered. All the zero candidates from the ARMC reordering process are excluded during the construction of Merge motion vector candidates list. The subgroup size is set to 5 for regular merge mode and TM merge mode. The subgroup size is set to 3 for affine merge mode.

Cost calculation

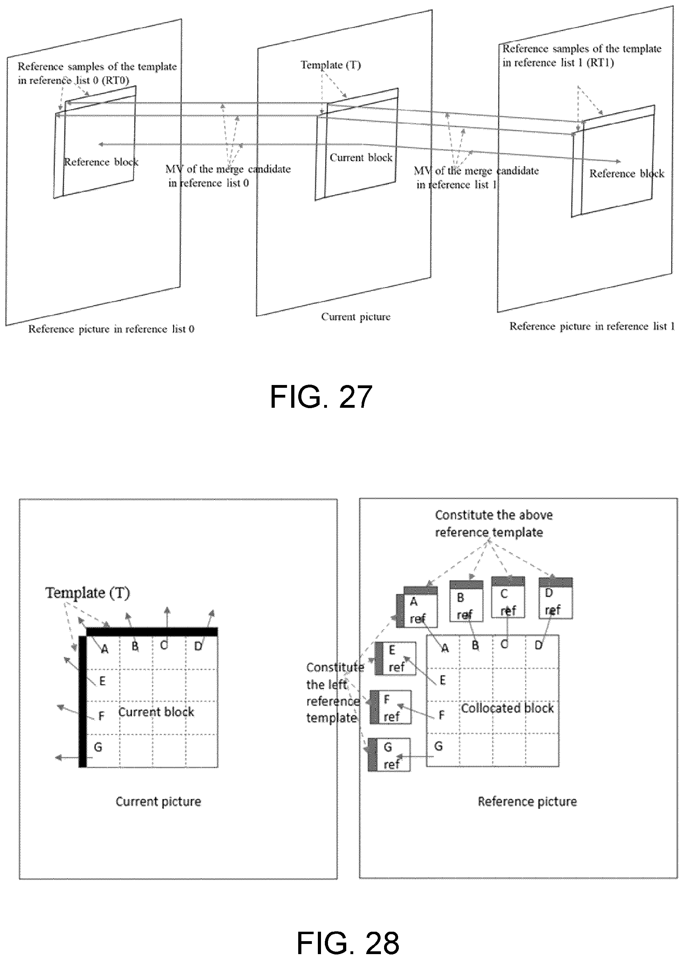

The template matching cost of a merge candidate during the reordering process is measured by the SAD between samples of a template of the current block and their corresponding reference samples. The template comprises a set of reconstructed samples neighboring to the current block. Reference samples of the template are located by the motion information of the merge candidate. When a merge candidate utilizes bi-directional prediction, the reference samples of the template of the merge candidate are also generated by bi-prediction as shown in FIG. 27.

Refinement of the initial merge candidate list

When multi-pass DMVR is used to derive the refined motion to the initial merge candidate list only the first pass (i.e., PU level) of multi-pass DMVR is applied in reordering. When template matching is used to derive the refined motion, the template size is set equal to 1. Only the above or left template is used during the motion refinement of TM when the block is flat with block width greater than 2 times of height or narrow with height greater than 2 times of width. TM is extended to perform 1/16-pel MVD precision. The first four merge candidates are reordered with the refined motion in TM merge mode.

For subblock-based merge candidates with subblock size equal to Wsub $\times$ Hsub, the above template comprises several sub-templates with the size of Wsub $\times$ 1, and the left template comprises several sub-templates with the size of 1 $\times$ Hsub. As shown in FIG. 28, the motion information of the subblocks in the first row and the first column of current block is used to derive the reference samples of each sub-template.

Reordering criteria

In the reordering process, a candidate is considered as redundant if the cost difference between a candidate and its predecessor is inferior to a lambda value e.g. |D1-D2| < $\lambda$, where D1 and D2 are the costs obtained during the first ARMC ordering and $\lambda$ is the Lagrangian parameter used in the RD criterion at encoder side.

The algorithm is defined as the following:

Determine the minimum cost difference between a candidate and its predecessor among all candidates in the list. If the minimum cost difference is superior or equal to $\lambda$, the list is considered diverse enough and the reordering stops. If this minimum cost difference is inferior to $\lambda$, the candidate is considered as redundant, and it is moved at a further position in the list. This further position is the first position where the candidate is diverse enough compared to its predecessor.

The algorithm stops after a finite number of iterations (if the minimum cost difference is not inferior to $\lambda$).

This algorithm is applied to the Regular, TM, BM and Affine merge modes. A similar algorithm is applied to the Merge MMVD and sign MVD prediction methods which also use ARMC for the reordering.

The value of λ is set equal to the λ of the rate distortion criterion used to select the best merge candidate at the encoder side for low delay configuration and to the value λ corresponding to a another QP for Random Access configuration. A set of λ values corresponding to each signaled QP offset is provided in the SPS or in the Slice Header for the QP offsets which are not present in the SPS.

Extension to AMVP modes

The ARMC design is also applicable to the AMVP mode wherein the AMVP candidates are reordered according to the TM cost. For the template matching for advanced motion vector prediction (TM-AMVP) mode, an initial AMVP candidate list is constructed, followed by a refinement from TM to construct a refined AMVP candidate list. In addition, an MVP candidate with a TM cost larger than a threshold, which is equal to five times of the cost of the first MVP candidate, is skipped.

Note, when wrap around motion compensation is enabled, the MV candidate shall be clipped with wrap around offset taken into consideration.

MV candidate type based ARMC

Merge candidates of one single candidate type, e.g., TMVP or non-adjacent MVP (NA-MVP), are reordered based on the ARMC TM cost values. The reordered candidates are then added into the merge candidate list. The TMVP candidate type adds more TMVP candidates with more temporal positions and different inter prediction directions to perform the reordering and the selection. Moreover, NA-MVP candidate type is further extended with more spatially non-adjacent positions. The target reference picture of the TMVP candidate can be selected from any one of reference picture in the list according to scaling factor. The selected reference picture is the one whose scaling factor is the closest to 1.

TM based reordering for MMVD and affine MMVD

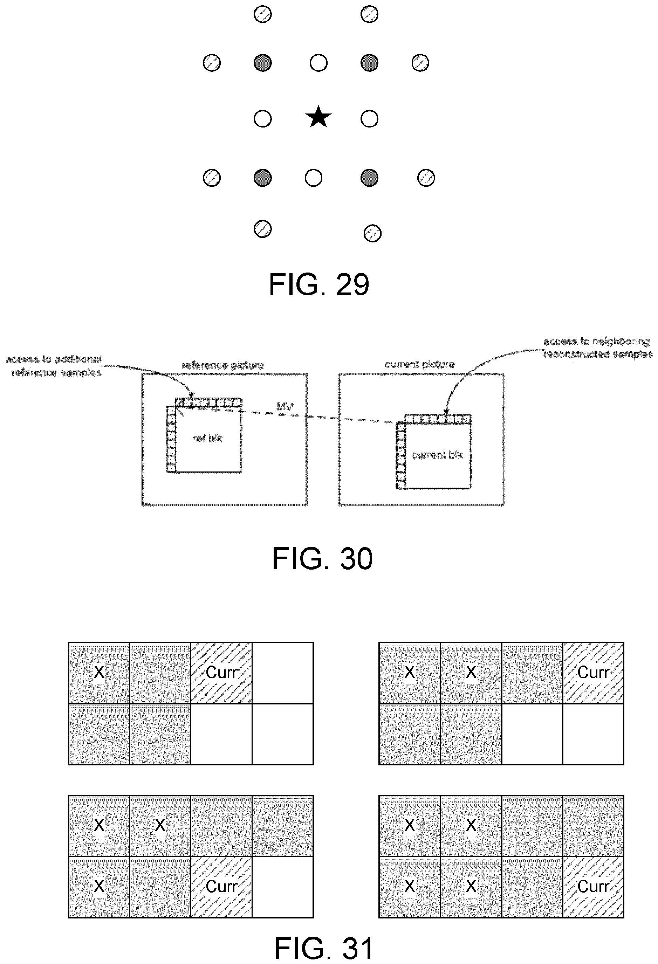

The MMVD offsets are extended for MMVD and affine MMVD modes. Additional refinement positions along k×π/8 diagonal angles are added shown in FIG. 29, thus increasing the number of directions from 4 to 16. Second, based on the SAD cost between the template (one row above and one column left to the current block) and its reference for each refinement position, all the possible MMVD refinement positions (16×6) for each base candidate are reordered. Finally, the top 1/8 refinement positions with the smallest template SAD costs are kept as available positions, consequently for MMVD index coding. The MMVD index is binarized by the rice code with the parameter equal to 2. The affine MMVD reordering is extended, in which additional refinement positions along k×π/4 diagonal angles are added. After reordering top 1/2 refinement positions with the smallest template SAD costs are kept.

The first N motion candidates in the candidate list before being reordered are utilized as the base candidates for MMVD and affine MMVD. N is equal to 3 for MMVD, and [1, 3] depending on the neighboring block affine flags for affine MMVD. Two ways of adding MMVD offsets are allowed, including the 'two-side' and 'one-side', depending on whether the offset of the other reference picture list is mirrored or directly set to zero. Which way is applied to one block is dependent on the TM cost.

Recent advances in temporal prediction enhancements in ECM

Local illumination compensation (LIC)

LIC is an inter prediction technique to model local illumination variation between current block and its prediction block as a function of that between current block template and reference block template as illustrated on FIG. 30. The parameters of the function can be denoted by a scale $\alpha$ and an offset $\beta$, which forms a linear equation, that is, $\alpha*p[x]+\beta$ to compensate illumination changes, where p[x] is a reference sample pointed to by MV at a location x on reference picture. When wrap around motion compensation is enabled, the MV shall be clipped with wrap around offset taken into consideration. Since $\alpha$ and $\beta$ can be derived based on current block template and reference block template, no signaling overhead is required for them, except that an LIC flag is signaled for AMVP mode to indicate the use of LIC. For the merge mode, the LIC flag is not inherited from a merge candidate, instead, it is derived on-the-fly. More specifically, LIC flag of a merge candidate is derived by comparing two template costs: a SAD-based template cost, denoted as C0, and a Mean Removal SAD (MRSAD)-based template cost, denoted as C1. The LIC flag is set to be false, if C0 <= C1 and is set to be true, if C0 > C1. To favor the inherited LIC flag, C0 is multiplied by $\alpha$ if the inherited LIC flag is false while C1 is multiplied by $\alpha$ if the inherited LIC flag is true, where $\alpha < 1$.

Local illumination compensation can be used for inter CUs with the following modifications: intra neighbor samples can be used in LIC parameter derivation; LIC is disabled for blocks with less than 32 luma samples; for both non-subblock and affine modes, LIC parameter derivation is performed based on the template block samples corresponding to the current CU, instead of partial template block samples corresponding to first top-left 16x16 unit; and samples of the reference block template are generated by using MC with the block MV without rounding it to integer-pel precision.

For the bi-predictive inter CUs, two sets of LIC parameters are separately derived for L0 and L1 prediction samples. An iterative manner to derive the L0 and L1 LIC parameters is applied. Specifically, L0 LIC parameters are firstly derived by minimizing difference between L0 template prediction T0 and the template T and the samples in T are updated by subtracting the corresponding samples in T0. Then, the L1 parameters are calculated that minimizes the difference between L1 template prediction T1 and the updated template. Finally, the L0 parameter is refined again in the same way.

More recently, the three following improvements were brought to LIC tool:

LIC with multiple templates is proposed. Besides using a template comprising neighboring samples both top to and left to the current block, two new LIC modes using top-only or left-only template are proposed to derive the parameters of LIC. LIC with multiple templates is only applied to AMVP uni-predicted blocks. LIC with slope adjustment is proposed, in which an adjustment parameter is used to modify parameters of LIC. The adjustment parameter is signaled for AMVP mode. LIC with slope adjustment is not applied to bi-prediction.

LIC flag is explicitly signaled for inter-prediction merge modes, instead of inheriting the flag value from a merge candidate as was previously done. The flag is signaled to indicate if the original inherited LIC flag or the reverse LIC flag value is used for a merge candidate. The flag is signaled for regular merge mode, affine merge mode and TM merge mode.

Non-local illumination compensation (NLIC) is now supported. Instead of template samples, in the method, the linear model is derived from the previously coded inter CUs by minimizing the difference between their reconstruction and prediction samples. When constructing the merge lists, up to 16 and 6 NLIC candidates (obtained from both spatial adjacent and non-adjacent positions) are inserted to the lists of regular merge and subblock merge respectively, and reordered with the existing merge candidates. The lengths of the output merge lists are kept unchanged. The same pattern used for non-adjacent merge mode (see FIG. 23) is reused to locate the non-adjacent positions in the scheme.

Further improvements of LIC are also supported as follows.

Merge candidates with LIC flag enabled may be duplicated. The corresponding LIC model parameters are inherited in addition to merged motion information. Two methods are envisioned to determine how the new merge candidates are selected in mode decision.

The LIC flag derivation process based on SAD/MR-SAD template matching cost comparison is expanded to compete with the new merge candidate (i.e., competing with ECM LIC and LIC off using template cost). The new merge candidates are put together with other ECM's merge candidates in ARMC process for reordering.

If the new merge candidate stays at the last after competition, the derivation process of LIC model parameters for the new merge candidates could be bypassed completely in the motion compensation process of either template or prediction blocks. Besides, in the case of GPM merge modes, LIC model parameters from causally neighboring blocks could be inherited conditionally, when they have LIC flags determined to be true, in addition to motion information during the construction process of GPM merge candidate list. Accordingly, LIC could be enabled for GPM without the model parameter derivation in motion compensation.

Intra block copy mode is discussed below. Intra block copy (IBC) coding is an intra prediction mode used in VVC and ECM. Intra block copy (IBC) is a tool used in HEVC and VVC for screen content coding. It is well known that it significantly improves the coding efficiency of screen content materials. Since IBC mode is implemented as a block level coding mode, block matching (BM) is performed at the encoder to find the optimal block vector (or motion vector) for each CU. A block vector indicates the displacement from the current block to a reference block, which is already reconstructed inside the current picture. The luma block vector of an IBC-coded CU is in integer precision. The chroma block vector rounds to integer precision as well. When combined with AMVR, the IBC mode can switch between 1-pel and 4-pel motion vector precisions. An IBC-coded CU is treated as the third prediction mode other than intra or inter prediction modes. The IBC mode is applicable to the CUs with both width and height smaller than or equal to 64 luma samples.

At CU level, IBC mode is signaled with a flag, and it can be signaled as IBC AMVP mode or IBC skip/merge mode as follows:

IBC skip/merge mode: a merge candidate index is used to indicate which of the block vectors in the list from neighboring candidate IBC coded blocks is used to predict the current block. The merge list consists of spatial, HMVP, and pairwise candidates.

IBC AMVP mode: block vector difference is coded in the same way as a motion vector difference. The block vector prediction method uses two candidates as predictors, one from left neighbor and one from above neighbor (if IBC coded). When either neighbor is not available, a default block vector will be used as a predictor. A flag is signaled to indicate the block vector predictor index.

IBC reference region

To limit memory consumption and decoder complexity, the IBC in VVC allows only the reconstructed portion of the predefined area including the region of current CTU and some region of the left CTU. FIG. 31 illustrates the reference region of IBC Mode, where each block represents 64x64 luma sample unit.

Depending on the location of the current coding CU location within the current CTU, the following applies:

If current block falls into the top-left 64x64 block of the current CTU, then in addition to the already reconstructed samples in the current CTU, it can also refer to the reference samples in the bottom-right 64x64 blocks of the left CTU, using CPR mode. The current block can also refer to the reference samples in the bottom-left 64x64 block of the left CTU and the reference samples in the top-right 64x64 block of the left CTU, using CPR mode.

If current block falls into the top-right 64x64 block of the current CTU, then in addition to the already reconstructed samples in the current CTU, if luma location (0, 64) relative to the current CTU has not yet been reconstructed, the current block can also refer to the reference samples in the bottom-left 64x64 block and bottom-right 64x64 block of the left CTU, using CPR mode; otherwise, the current block can also refer to reference samples in bottom-right 64x64 block of the left CTU.

If current block falls into the bottom-left 64x64 block of the current CTU, then in addition to the already reconstructed samples in the current CTU, if luma location (64, 0) relative to the current CTU has not yet been reconstructed, the current block can also refer to the reference samples in the top-right 64x64 block and bottom-right 64x64 block of the left CTU, using CPR mode. Otherwise, the current block can also refer to the reference samples in the bottom-right 64x64 block of the left CTU, using CPR mode.

If current block falls into the bottom-right 64x64 block of the current CTU, it can only refer to the already reconstructed samples in the current CTU, using CPR mode.

This restriction allows the IBC mode to be implemented using local on-chip memory for hardware implementations.

IBC merge/AMVP list construction in ECM

The IBC merge/AMVP list construction compared to VVC is modified as follows:

Only if an IBC merge/AMVP candidate is valid, it can be inserted into the IBC merge/AMVP candidate list.

Above-right, bottom-left, and above-left spatial candidates (belonging to the adjacent spatial candidate category) and one pairwise average candidate can be added into the IBC merge/AMVP candidate list.

Template based adaptive reordering (ARMC-TM) is applied to IBC merge list.

Candidates from non-adjacent spatial neighboring blocks (a.k.a., non-adjacent candidates) can be added to the candidate lists of IBC merge modes and IBC AMVP. These non-adjacent candidates are inserted between the adjacent spatial candidates and the HBVP candidates for both IBC merge and IBC AMVP. The same reference area of non-adjacent merge in regular inter mode is reused for the IBC.

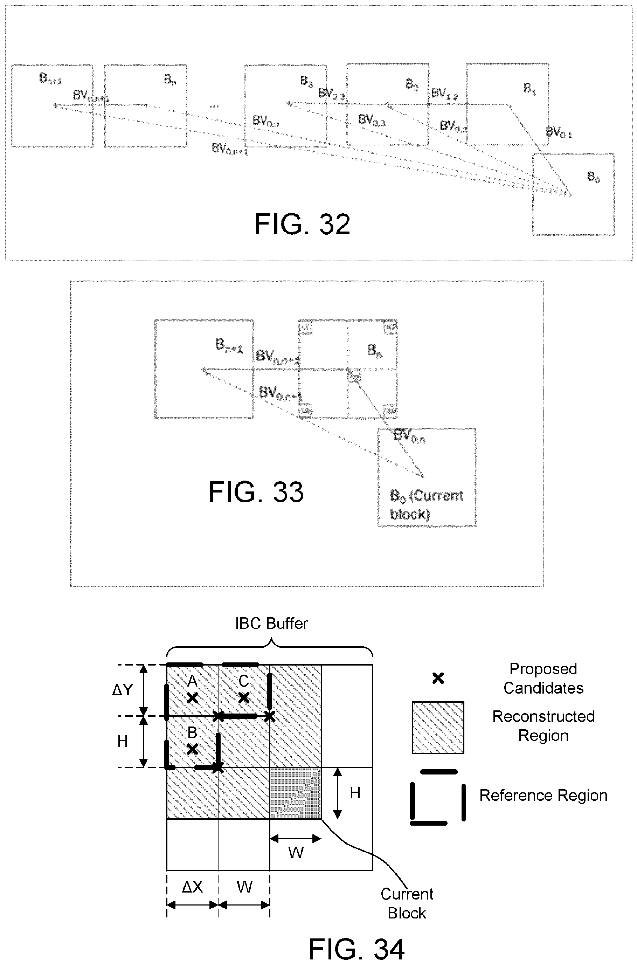

Auto-relocated block vector prediction (AR-BVP) candidates are added to the IBC merge and AMVP candidate list right after the HBVP candidates. As shown in FIG.32, an example of how to derive AR-BVP, a guiding block vector $BV_{0,1}$ (i.e., an existing BVP already in the candidate list) associated with the current block $B_0$ points to a reference block $B_1$. If $B_1$ has a BV denoted as $BV_{1,2}$ pointing to a reference block $B_2$, then $BV_{0,2}$, given by $BV_{0,2} = BV_{0,1} + BV_{1,2}$, is defined as the AR-BVP, guided by $BV_{0,1}$. When deriving $BV_{n,n+1}$ guided by $BV_{0,n}$, all five positions including top-left (e.g., LT in FIG. 33), top-right (e.g., RT in FIG. 33), center (e.g., Ctr in FIG. 33), bottom-left (e.g., LB in FIG. 33), and bottom-right (e.g., RB in FIG.33) positions of Bn are checked to find $BV_{n,n+1}$.

Restriction that adjacent spatial candidates cannot be used for IBC merge of a 4x4 CU is removed.

The HMVP table size for IBC is increased to 25. After up to 20 IBC merge candidates are derived with full pruning, they are reordered together. After reordering, the first 6 candidates with the lowest template matching costs are selected as the final candidates in the IBC merge list.

The zero vectors' candidates to pad the IBC Merge/AMVP list are replaced with a set of BVP candidates located in the IBC reference region. A zero vector is invalid as a block vector in IBC merge mode, and consequently, it is discarded as BVP in the IBC candidate list.

Three candidates are located on the nearest corners of the reference region, and three additional candidates are determined in the middle of the three sub-regions (A, B, and C), whose coordinates are determined by the width, and height of the current block and the ΔX and ΔY parameters, as is depicted in FIG. 34.

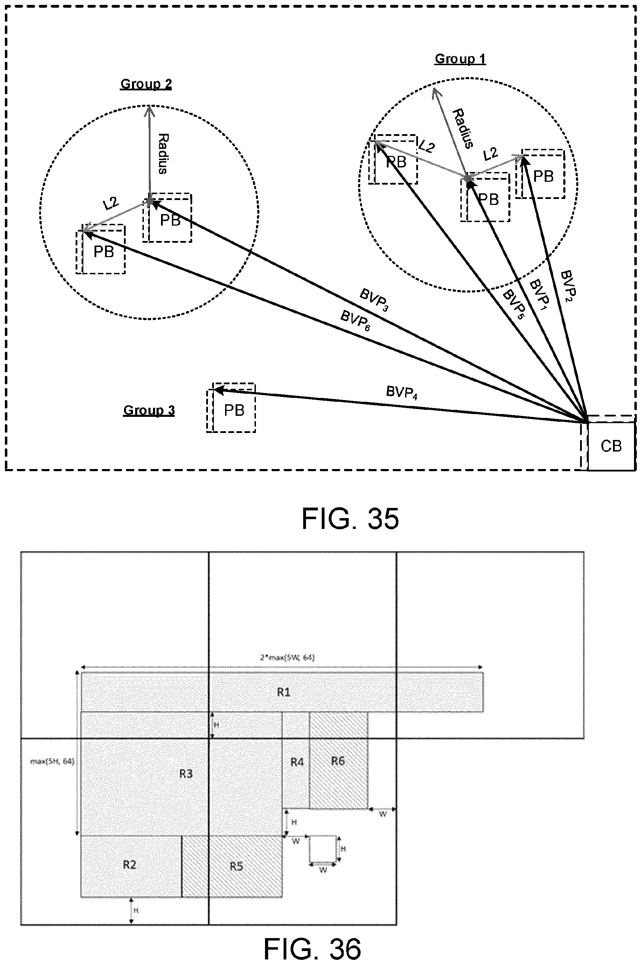

During the IBC AMVP list construction, a clustering of the BVP candidates may be applied when both BV candidate components are non-zero. The clustering as shown in FIG. 35 with L2 distance is applied if there are more than 2 valid BV candidates and up to 6 candidates are clustered, the clustering radius is defined as

$$Radius = \log_2((cbWidth \cdot cbHeight) \gg MIN\_PU\_SIZE)$$

The clustering method is applied in the candidate list order, and the candidates assigned to a group are removed from the list for the subsequent clusters. In each group, the BVP with a lowest TM cost is selected as the representative candidate of that group. Finally, the representative candidates of the two first groups are chosen as the candidates for the IBC AMVP list.

Furthermore, if one of BV candidate components is zero or block is coded in RRIBC, a flag is signaled to indicate this case with a directional flag indicating horizontal or vertical component is non-zero. Instead of usual IBC AMVP list, two new BVP candidates are derived, and the sign of the non-zero BV component is derived at decoder side. The AMVP BVP0 is set to the nearest valid location to the current block (-cbWidth or -cbHeight), so the non-zero BVD is always negative, pointing to the left for a BV with a zero vertical component or to the above for a BV with a zero horizontal component. Likewise, the AMVP BVP1 is set to the farthest position from the current block in the valid reference region, that is the left boundary or the top boundary of the IBC search region. Consequently, if the BVP1 is selected, the BVD is always positive, pointing to the right for BV with a zero vertical component or to the bottom for BV with a zero-horizontal component.

The optimal IBC AMVP index is signaled, which allows deriving the sign of the non-zero BVD component at the decoder side. The absolute magnitude of non-zero BVD component is further signaled. In RRIBC, the direction of the flipping mode is derived from the signaled directional flag.

ITMP (Intra Template Matching Prediction) prediction mode in ECM

Intra template matching prediction (Intra TMP) is a special intra prediction mode that copies the best prediction block from the reconstructed part of the current frame, whose L-shaped template matches the current template. For a predefined search range, the encoder searches for the most similar template to the current template in a reconstructed part of the current frame and uses the corresponding block as a prediction block. The encoder then signals the usage of this mode, and the same prediction operation is performed at the decoder side.

Sum of absolute differences (SAD) is used as a cost function.

A given search order of the 6 regions is utilized, i.e., R4, R5, R6, R1, R2, and R3 as illustrated on FIG. 36. Within each region, the decoder constructs a candidate list of up to "19" template matching block vectors that are ranked in ascending order according to the template cost (SAD). The following modes are supported:

Single predictor: A single predictor is selected from the candidate list.

Fusion of multiple predictors: multiple predictors are blended multiple to derive the final prediction block. The blending weights are either computed from the template matching cost of each predictor, or with Wiener-filter based weight derivation method.

Sub-pel precision: When single predictor is used, sub-pel precision can be used with 1/2-pel precision, 1/4-pel precision and 3/4-pel precision, each with 8 possible directions.

Linear filter model: A linear filter can be learned between the reference template and current template and be applied the linear model to reference block. This mode can be used for single predictor when sub-pel precision is not used.

The dimensions of all regions (SearchRange_w, SearchRange_h) are set proportional to the block dimension (BlkW, BlkH) to have a fixed number of SAD comparisons per pixel. That is:

$$SearchRange\_w = min(64, a * BlkW)$$

$$\text{SearchRange\_h} = \min(64, a * \text{BlkH})$$

Where 'a' is a constant that controls the gain/complexity trade-off. In practice, 'a' is equal to 5.

To speed-up the template matching process, the search range of all search regions is subsampled by a factor of 3. After finding the best match, a refinement process is performed. The refinement is done via a second template matching search around the best match with a reduced range.

The Intra template matching tool is enabled for CUs with size less than or equal to 64 in width and height. This maximum CU size for Intra template matching is configurable.

The Intra template matching prediction mode is signaled at CU level through a dedicated flag when DIMD is not used for current CU.

Occurrence-based intra coding (OBIC, *EE2-2.2: Occurrence-based intra coding (OBIC)*", *Ramin G. Youvalari, Mohsen Abdoli, Alexandre Tissier, Document JVET-AH0076, 34thMeeting, Rennes, FR, 17 24 April 2024)*

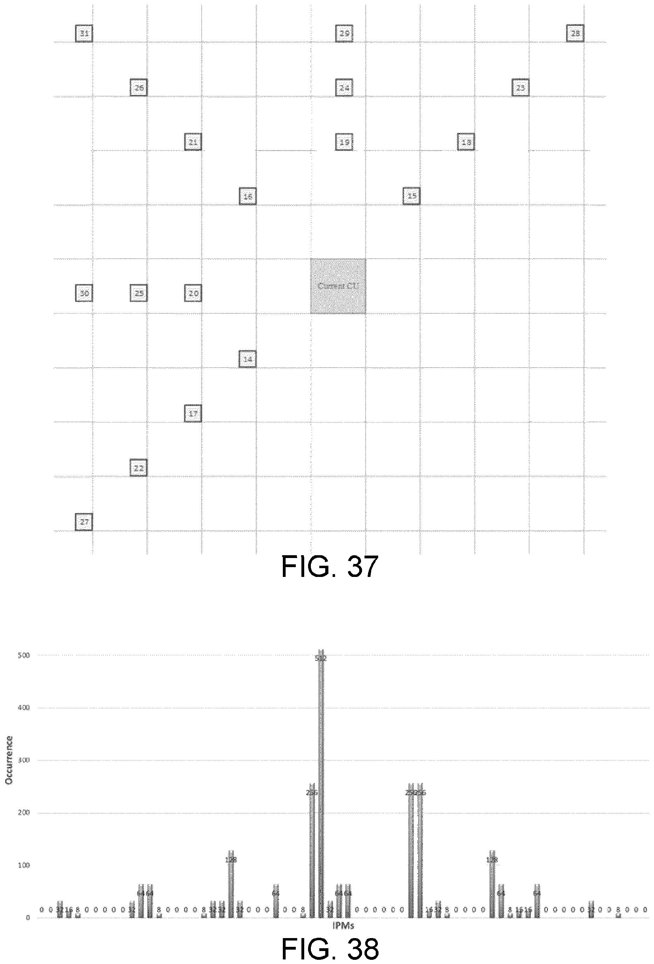

A new tool intra prediction mode called OBIC (Occurrence-Based Intra Coding) is proposed in JVET-AH0076. The occurrence-based intra coding derives the intra prediction modes of the current block based on the sample-wise occurrence of the intra modes in the spatial neighborhood of the block. For this, adjacent and non-adjacent spatial neighboring blocks are checked and the intra prediction modes of the blocks are collected into an occurrence histogram. The OBIC method uses the Histogram of occurrence (HoC), which consists of the intra modes and their sample-wise occurrences. The occurrence values are calculated based on the number of samples that are coded in a certain intra prediction mode (IPM) in that neighborhood. For example, if a uiWidth $\times$ uiHeight block is coded with an IPM mode, the occurrence of the mode in that particular block is calculated as: HoC[IPM] += uiWidth * uiHeight, where uiWidth and uiHeight are the width and height of a spatial neighboring block. The occurrences of the existing modes from the spatial neighborhood blocks are accumulated into the histogram. FIG. 37 shows the non-adjacent spatial neighboring blocks that are used in OBIC mode's HoC generation.

Up to five angular modes with the highest occurrence along with the planar mode or block vector-based prediction are selected from the HoC and used for final prediction by blending the prediction of the selected modes. The blending weights are calculated based on the occurrence values are used for OBIC.FIG. 38 illustrates an example of an histogram of occurrences of IPM modes in a spatial neighborhood of a CU. The OBIC mode is applied to only luma blocks. Moreover, the mode is disabled for blocks that have less than 64 samples.

Some of the embodiments described herein relates to providing a new motion vector (MV) or block vector (BV) sorting criterion, based on occurrence, to improve image/video compression efficiency.

Any one of the embodiments described herein can be implemented for instance in the prediction mode module 205 of a video encoder for example as described with FIG. 2 and a prediction mode module 370 of a video decoder for example as described with FIG. 3.

In some embodiments, some occurrence information is collected that is associated with some MV/BV that are candidate to be part of a list of MV/BV predictors that can be used to predict the MVBV of a current block or coding unit (CU).

In the document, MV (motion vectors) refers to motion vectors used to identify a region in a reference picture to predict a current block to encode or decode, while BV (block vector) refers to motion vectors used to identify a region in the current picture of the current block to predict the current block to encode or decode. In other words, MV refers to motion information for inter-prediction while BV refers to motion information for intra- prediction.

Embodiments described herein apply to any kind of motion information whether it refers to inter-prediction or intra-prediction. In the following, the wording "motion vector" is used either for inter-prediction (MV) or intra-prediction (BV).

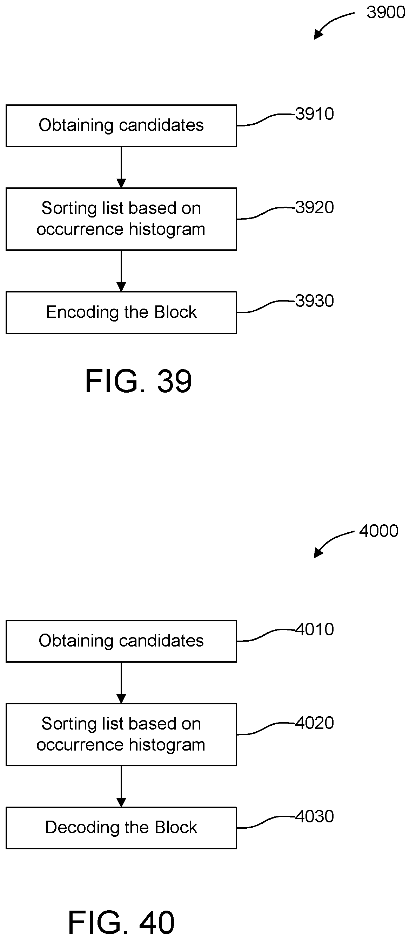

FIG. 39 illustrates an example of a method 3900 for encoding a block of a video according to an embodiment. For at least one block of a video to encode, at 3910, a list of motion vector candidates for predicting the at least one block is obtained. The manner the list is obtained depends on the coding mode used for encoding the block. For example, the list can be obtained as in a merge mode, an AMVP mode, an intra block copy mode, an intra template matching prediction mode, etc. For example, the list of motion vector candidates comprises at least one of spatial candidates, non-adjacent candidates, temporal candidates, history motion vector predictor candidates, or pairwise candidates.

A histogram of occurrences of the motion vector candidates is also determined. The histogram of occurrences counts for each motion vector candidate a number of occurrences the motion vector is used for a neighbor block of the block to encode.

At 3920, the list of motion vector candidates is sorted based on the occurrence histogram. For example, the list is sorted in decreasing order of occurrences: motion vectors with highest value of occurrences are put first in the list.

At 3930, the block is encoded using one or more of the motion vector candidates in the sorted list. In a variant, the first candidate in the sorted list is selected. In another variant, the candidate providing the best prediction for the block is selected and an index indicating the selected candidate in the list is encoded. In some variants, a subset of the sorted candidates is kept and the candidate is selected among this subset of candidates.

In some variants, a flag indicating that the list is sorted based on occurrences of the motion vector candidates is encoded in a bitstream. The flag enables or disables sorting the list based on occurrences. In other variants, the flag indicates whether the list is sorted based on occurrences of the motion vector candidates or based on a template matching cost determined on a template of the block to encode. For example, the flag is encoded at the block level or slice level, or picture or sequence level. At 3930, for example, the block is encoded by obtaining a prediction residual using the selected motion vector candidate from the sorted list. The prediction of the block using the selected motion vector candidate from the sorted list is done according to the coding mode of the block (merge, AMVP, IBC, Intra TMP, etc...). Prediction residual is transformed, quantized and entropy encoded in the bitstream. Any signaling relating to the coding mode of the block is also encoded in the bitstream.

FIG. 40 illustrates an example of a method 4000 for decoding a block of a video according to an embodiment. For at least one block of a video to decode, at 4010, a coding mode for predicting the block is determined. For example, any signaling relating to the coding mode of the block is decoded for a bitstream. At 4010, a list of motion vector candidates for predicting the block is obtained. The manner the list is obtained depends on the coding mode used for predicting the block. For example, the list can be obtained as in a merge mode, an AMVP mode, an intra block copy mode, an intra template matching prediction mode, etc.... For example, the list of motion vector candidates comprises at least one of spatial candidates, non-adjacent candidates, temporal candidates, history motion vector predictor candidates, or pairwise candidates.

A histogram of occurrences of the motion vector candidates is also determined. The histogram of occurrences counts for each motion vector candidate a number of occurrences the motion vector is used for a neighbor block of the block to decode.

At 4020, the list of motion vector candidates is sorted based on the occurrence histogram. For example, the list is sorted in decreasing order of occurrences. In some variants, the list is sorted responsive to decoding a flag from the bitstream. In this variant, at 4020, the flag is first decoded and then if the flag indicates sorting the list based on occurrences, the list is sorted based on occurrences, otherwise the list is not sorted. The decoded flag enables or disables sorting the list based on occurrences. In other variants, the flag indicates whether the list is sorted based on occurrences of the motion vector candidates or based on a template matching cost determined on a template of the block to decode. In this other variant, at 4020, the list is sorted based on the occurrences when the flag has a first value, or based on template matching cost if the flag has another value. For example, the flag is decoded at the block level or slice level, or picture or sequence level.

At 4030, the block is decoded/reconstructed using one or more of the motion vector candidates in the sorted list. In a variant, the first candidate in the sorted list is selected. In another variant, an index indicating the selected candidate in the list is decoded. In some variants, a subset of the sorted candidates is kept and the candidate is selected among this subset of candidates.

For example, a prediction of the block using the selected motion vector candidate from the sorted list is obtained according to the coding mode of the block (merge, AMVP, IBC, Intra TMP, etc...). The block is reconstructed by decoding a prediction residual, for example by entropy decoding, dequantizing and inverse transforming the prediction residual and adding the prediction to the decoded prediction residual.

In the following, further variants and embodiments for sorting of MV or BV candidates to construct a MV/BV predictor candidate list are provided.

As discussed above, for an inter CU to encode or decode, the occurrence of motion vectors in the spatial neighborhood of the CU is computed. Then, these motion vectors are sorted in the merge or AMVP MV prediction candidate list by decreasing order of occurrence. A histogram of MV occurrence in a spatial neighborhood of the CU to code is computed. The histogram is thus indexed by the (x-,y-) coordinates of candidate motion vectors for predicting the MV of current CU. According to a variant, motion of block vectors may be represented in polar coordinates, and the histogram of occurrence may be based on the magnitude and orientation of vectors.

Once the histogram of motion information is computed, motion vectors are then sorted by decreasing order of occurrence.

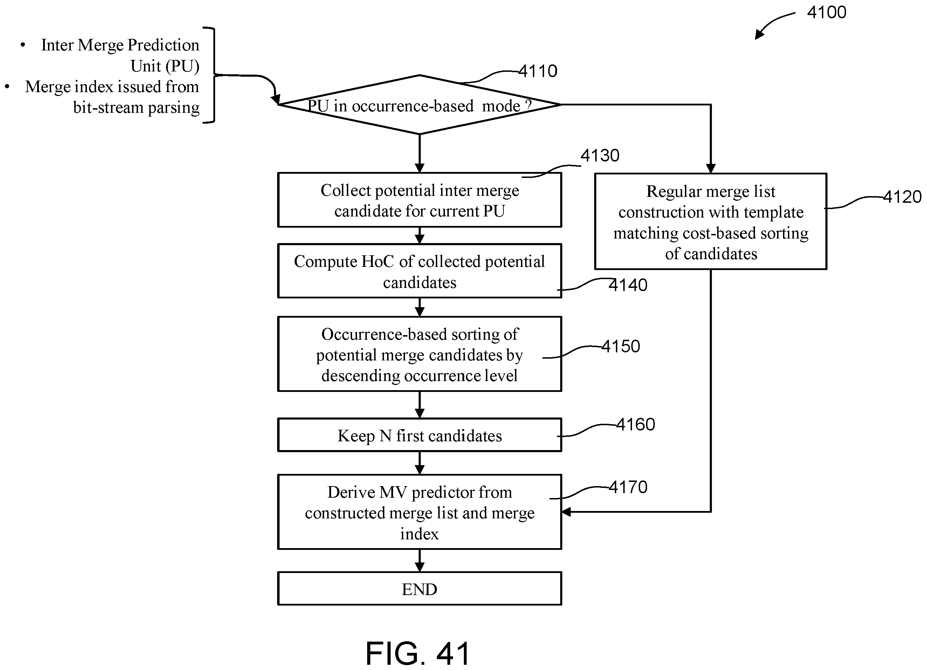

FIG. 41 illustrates an example of a method 4100 for obtaining an occurrence-based sorted list of MV prediction candidates in an inter merge mode, according to an embodiment.

At 4110, it is checked whether or not the PU is encoded in an occurrence-based mode, for example by checking a flag decoded for the PU, or the block it belongs to or a CTU to which the PU belongs. The occurrence-based mode can also be signaled in the coding mode. For example, it can be the default list sorting of the inter merge mode. In this mode, a merge index is also decoded from the bitstream.

If the PU is not in occurrence-based mode, then at 4120, the merge list with motion candidates is constructed and sorted using template matching cost. Otherwise, at 4130, inter merge candidate are collected for the PU and the histogram of occurrences of the inter merge candidates is determined at 4140. At 4150, the list of merge candidates is sorted based on occurrences of the candidate by descending occurrence level. At 4160, a number N of first candidates from the sorted list is kept and at 4170, motion vector predictor is derived based on the N first candidates and decoded merge index.

FIG. 41 describes an embodiment for a block coded in an inter merge coding mode. The process for other coding modes wherein a reordering of a motion vector candidates list is used can be done in a similar way.

For example, for an IBC CU to encode or decode, the occurrence of block vectors in the spatial neighborhood of the CU is computed. Then, these motion vectors are sorted in the IBC merge or AMVP MV prediction candidate list by decreasing order of occurrence.

For an Intra-TMP CU to encode or decode, the occurrence of block vectors in the spatial neighborhood of the CU is computed. Then, these block vectors are sorted in the candidate list by decreasing order of occurrence. The set of occurrence-based sorted BVs may also include BV from IntraTMP merge candidate.

For any of the above embodiments, as shown on the example of FIG. 41, the use of occurrence based MV/BV sorting between spatial neighbors of current CU can be signaled at CU level (4110). Thus, encoder may select the MV/BV sorting process among a template matching or bilateral matching criteria (according to the type of CU being process) and an occurrence-based sorting criterion.

Alternatively, the occurrence based MV/BV sorting criteria may be jointly used with the template matching cost-based sorting criteria currently used in ECM. For instance, occurrence-based sorting may first be applied. Then, the template matching cost-based sorting process may be applied on a subset of best occurrence-based ranked candidates.

In an embodiment, the occurrence-based competition between Motion Vectors/Block Vectors does not only apply to MV/BV stored in a spatial neighborhood of current CU but is applied to all MVsBVs considered as potential candidates to predict/derive the MV/BV of current CU. This corresponds to potential candidates in the Inter merge or inter AMVP motion vector prediction modes, which typically involves spatial candidates, Non-adjacent candidates, Temporal candidates, HMVP candidates, Pairwise candidates.

Alternatively, the occurrence-based sorting may apply between certain types of MV/BV predictor candidates. For instance, it may apply only between HMVP candidates. In another example, it may apply between MVP candidates which are not part of spatial neighboring candidates. Then the MVP candidates list may first be constructed with spatial neighboring candidates, then with other candidates (Temporal candidates, HMVP candidates, pairwise candidates) which may be occurrence-based sorted between each other.

In some variants, the proposed occurrence-based MV management method may only apply to uni-prediction merge/AMVP candidates.

In other variants, the proposed occurrence-based MVP sorting process may also apply to CU with assigned various motion representation. This may include AMVR mode, GPM mode, AMVP-merge motion representation mode, Affine motion representation mode, CIIP, etc.

In an embodiment, during the construction of the histogram of occurrences, the motion vectors or block vectors may undergo a quantization step, in order to make the histogram of occurrence more meaningful, since many possible motion vector or block vector values can populate it. This may take the form of representing vector information with a reduced accuracy level to construct the histogram.

Alternatively, a specific similarity criterion between motion vectors may be used to feed the histogram of occurrence. For instance, 2 motion vectors may be considered as similar if the L1 or L2 norm of their difference is below some threshold value, a similar manner as the BV clustering process.

Finally, in case motion/block vector information is quantized or a similarity criterion between vector is used, the MV/BV that represents a set of identical MV/BV with respect to the used criterion may be chosen as the MV/BV coming from the block closest to the current block, in spatial position or coding order. The goal is to maximize the likelihood that selected MV/BV represents the motion of current block with highest possible quality, in order to make the inter prediction or BV-based prediction of current block as close as possible to the original version of current block.

Furthermore, after selecting the closest or latest coded/decoded MV/BV in the set of similar vectors with highest occurrence level, a template matching based refinement of the selected MVBV may be applied in order to make the selected MV/BV as relevant as possible for the prediction of current block.

High-level control of the proposed motion vector coding method is also provided. According to a variant, the proposed occurrence-based MV/BV sorting method may normatively be activated/deactivated by means of a dedicated sequence parameter set (SPS) signaling flag. According to a variant, the proposed occurrence-based MV/BV sorting method may normatively be activated/deactivated by means of a dedicated picture parameter set (PPS) signaling flag. According to a variant, the proposed occurrence-based MV/BV sorting method may normatively be activated/deactivated by means of a dedicated picture header syntax element. According to a variant, the proposed occurrence-based MV/BV sorting method may normatively be activated/deactivated by means of a dedicated slice header syntax element. According to a variant, the proposed occurrence-based MV/BV sorting method may normatively be activated/deactivated by means of a dedicated sub-picture level syntax element. According to a variant, the proposed occurrence-based MV/BV sorting method may normatively be activated/deactivated by means of a dedicated CTU (coding tree unit) level syntax element.

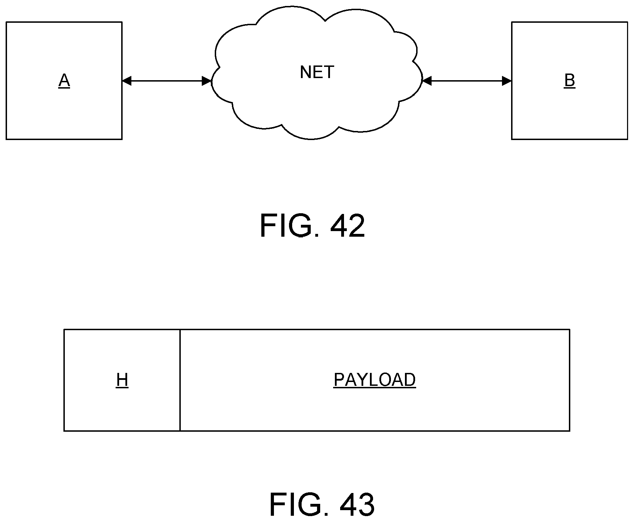

In an embodiment, illustrated in FIG. 42, in a transmission context between two remote devices A and B over a communication network NET, the device A comprises a processor in relation with memory RAM and ROM which are configured to implement a method for encoding an image or a video according to any one of the embodiments described herein and the device B comprises a processor in relation with memory RAM and ROM which are configured to implement a method for decoding an image or a video according to any one of the embodiments described herein. In accordance with an example, the network is a broadcast network, adapted to broadcast/transmit a coded video from device A to decoding devices including the device B.

FIG. 43 shows an example of the syntax of a signal transmitted over a packet-based transmission protocol. Each transmitted packet P comprises a header H and a payload PAYLOAD. In some embodiments, the payload PAYLOAD may comprise data representative of an image or a video encoded according to any one of the embodiments described above. The payload can also comprise any signaling as described above. For example, the signal comprises a flag indicating an occurrence-based sorting of a motion vector candidate list.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, entropy decoding a sequence of binary symbols to reconstruct image or video data.

As further examples, in one embodiment "decoding" refers only to entropy decoding, in another embodiment "decoding" refers only to differential decoding, and in another embodiment "decoding" refers to a combination of entropy decoding and differential decoding, and in another embodiment "decoding" refers to the whole reconstructing picture process including entropy decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, determining re-sampling filter coefficients, re-sampling a decoded picture.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, are descriptive terms. As such, they do not preclude the use of other syntax element names.

This disclosure has described various pieces of information, such as for example syntax, that can be transmitted or stored, for example. This information can be packaged or arranged in a variety of manners, including for example manners common in video standards such as putting the information into an SPS, a PPS, a NAL unit, a header (for example, a NAL unit header, picture header or a slice header), or an SEI message. Other manners are also available, including for example manners common for system level or application level standards such as putting the information into one or more of the following:

> a. SDP (session description protocol), a format for describing multimedia communication sessions for the purposes of session announcement and session invitation, for example as described in RFCs and used in conjunction with RTP (Real-time Transport Protocol) transmission.
> b. DASH MPD (Media Presentation Description) Descriptors, for example as used in DASH and transmitted over HTTP, a Descriptor is associated to a Representation or collection of Representations to provide additional characteristic to the content Representation.
> c. RTP header extensions, for example as used during RTP streaming.
> d. ISO Base Media File Format, for example as used in OMAF and using boxes which are object-oriented building blocks defined by a unique type identifier and length also known as 'atoms' in some specifications.
> e. HLS (HTTP live Streaming) manifest transmitted over HTTP. A manifest can be associated, for example, to a version or collection of versions of a content to provide characteristics of the version or collection of versions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Some embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

A number of embodiments has been described above. Features of these embodiments can be provided alone or in any combination, across various claim categories and types.

**Claims**

1. A method, comprising, for at least one block of a video:

   obtaining a list of motion vector candidates for predicting the at least one block,
   obtaining a histogram of occurrences of the motion vector candidates,
   sorting the list of motion vector candidates based on the histogram,
   decoding the at least one block using one or more motion vector candidates selected from the list.

2. An apparatus comprising one or more processors operable to

   obtain a list of motion vector candidates for predicting the at least one block,
   obtain a histogram of occurrences of the motion vector candidates,
   sort the list of motion vector candidates based on the histogram,
   decode the at least one block using one or more motion vector candidates selected from the list.

3. The method of claim 1 further comprising, or the apparatus of claim 2, wherein the one or more processors are further operable to decode a flag at a block level, the flag indicating an occurrence-based sorting of the list.

4. The method or the apparatus of claim 3, wherein the flag indicates whether the list is sorted based on motion vector occurrences or on template matching cost.

5. The method of claim 1 further comprising, or the apparatus of claim 2, wherein the one or more processors are further operable to select a given number of motion vector candidates having highest occurrences from the sorted list and sort the selected motion vector candidates based on a template matching cost.

6. The method of any one of claims 1, or 3-5, or the apparatus of any one of claims 2-5, wherein the list of motion vector candidates comprises at least one of spatial candidates, non-adjacent candidates, temporal candidates, history motion vector predictor candidates, or pairwise candidates.

7. The method of any one of claims 1, or 3-6, or the apparatus of any one of claims 2-6, wherein the list comprises a given type of motion vector candidates.

8. The method of any one of claims 1, or 3-7, or the apparatus of any one of claims 2-7, wherein obtaining the histogram of occurrences of the motion vector candidates comprises quantizing values of the motion vector candidates.

9. The method of any one of claims 1, or 3-7, or the apparatus of any one of claims 2-7, wherein obtaining the histogram of occurrences of the motion vector candidates comprising determining whether a difference between two motion vector candidates is below a given value.

10. The method or the apparatus of claim 8 or 9, wherein if at least two motion vector candidates are determined to be similar, a representative in the histogram of the at least two motion vector candidates is selected as a motion vector candidate closest to the at least one block spatially or in a coding order.

11. The method of any one of claims 1, or 3-10, further comprising, or the apparatus of any one of claims 2-10, wherein the one or more processors are further operable to refine the one or more motion vector candidates selected from the list based on template matching.

12. The method of any one of claims 1, or 3-11, or the apparatus of any one of claims 2-11, wherein the list is used in a coding mode being at least one of a merge mode, an AMVP mode, an Intra Block Copy mode or an Intra Template Matching Prediction mode.

13. The method of any one of claims 1, or 3-11, or the apparatus of any one of claims 2-11, wherein the list is sorted in decreasing order of occurrences.

100A

110
Processor

120
Memory

115

## FIG. 1A

100B

105

RF

COMP

USB

HDMI

110
Processor

120
Memory

115

160
Display Interface

170
Audio Interface

180
Peripheral Interface

Communication Interface — 150

Communication Channel

190

## FIG. 1B

100C

105 — RF / COMP / USB / HDMI
110 — Processor
115
120 — Memory
130 — Encoder/Decoder
140 — Storage Device
150 — Communication Interface
160 — Display Interface
165 — Display
170 — Audio Interface
175 — Audio
180 — Peripheral Interface
185 — Peripherals
190 — Communication Channel

**FIG. 1C**

FIG. 2

FIG. 3

LCU width

LCU height

0      1      2

FIG. 4

Slice

ctuAddr

CTU

PU

cuIdx puIdx

tuIdx puPartIdx

TU, PU partition

FIG. 5

NxN    2Nx2N    Nx2N    2NxN

nLx2N    nLx2N    2NxnU    2NxnO

FIG. 6

FIG. 7

SPLIT_BT_VER    SPLIT_BT_HOR    SPLIT_TT_VER    SPLIT_TT_HOR

FIG. 8

FIG. 9

FIG. 10

FIG. 11

FIG. 12

Spatial candidate positions (5)

Select max. 4 candidates
(remove duplicated candidates)

Temporal candidate positions (2)

Partition redundancy removal
(e.g., avoid virtual 2Nx2N partition by merging 2 2NxN)

Select max. 1 candidates

Add combined bi-predictive candidates for B slices

Add zero merge candidates

Final merge candidates (maximum number is equal to MaxNumMergeCand)

# FIG. 13

1) Left A1

2) Above B1

3) Above Right B0

4) Below Left A0

5) Above Left B2

H or Center

Check avalability and select motion vector predictor position

Check avalability and select motion vector predictor position

Generation of a list of up to 4 spatial candidates

Scaling

New pruning process with partial comparison

Cand 5

No — Nb_Cand < Max_Cand ?

Max_cand =5

Yes

Generate combined predictors Update Nb_cand

No — Nb_Cand < Max_Cand ?

Yes

Add zero candidates until Nb_Cand == Max_Cand

Final list of MERGE candidates

# FIG. 14

Inter Prediction in VVC

Whole block-based inter prediction

Subblock-based inter prediction

Whole block-based merge / skip mode

Whole block-based AMVP mode

Affine AMVP mode

Subblock-based merge/skip mode

## FIG. 15

1) Left A1

2) Above B1

3) Above Right B0

4) Below Left B0

5) Above Left B2

Temporal H

Temporal C

Check availability and select motion vector prediction position

Check availability and select motion vector predictor position

Generate a list up to 4 spatial candidates

Scaling

Pruning process with partial comparison

Cand 5

Nb_Cand<(Max_Cand-1) ?    *no*

*yes*

Add HMVP candidates

Nb_Cand<Max_Cand ?    *yes*

Compute pairwise average predictors

*no*

Nb_Cand<Max_Cand ?

*no*

*yes*

Add $(Max - Cand\_Nb\_Cand)$ zero MV candidates

END

## FIG. 16

L0 reference                                    L1 reference

## FIG. 17

## FIG. 18

## FIG. 19

B2

B0 B1

A0

A1 FIG. 20

$(x_0, y_0)$ $(x_1, y_1)$

$\overline{v_0}$ $\overline{v_1}$

Cur

$(x_2, y_2)$ $(x_3, y_3)$

$\overline{v_2}$ $\overline{v_3}$

A

$\overline{v_4}$

$(x_4, y_4)$

FIG. 21

B2 B3 B1 B0

A2

Current block

A1

A0 T

FIG. 22

## FIG. 23

Reference frame            Current frame

## FIG. 24

## FIG. 25

## FIG. 26

## FIG. 27

## FIG. 28

FIG. 29

FIG. 30

FIG. 31

FIG. 32

FIG. 33

FIG. 34

FIG. 35

FIG. 36

FIG. 37

FIG. 38

3900

```
┌─────────────────────────┐
│  Obtaining candidates    │────3910
└─────────────────────────┘
            │
            ▼
┌─────────────────────────┐
│  Sorting list based on   │────3920
│  occurrence histogram    │
└─────────────────────────┘
            │
            ▼
┌─────────────────────────┐
│   Encoding the Block     │────3930
└─────────────────────────┘
```

## FIG. 39

4000

```
┌─────────────────────────┐
│  Obtaining candidates    │────4010
└─────────────────────────┘
            │
            ▼
┌─────────────────────────┐
│  Sorting list based on   │────4020
│  occurrence histogram    │
└─────────────────────────┘
            │
            ▼
┌─────────────────────────┐
│   Decoding the Block     │────4030
└─────────────────────────┘
```

## FIG. 40

- Inter Merge Prediction Unit (PU)
- Merge index issued from bit-stream parsing

4100

4110

PU in occurrence-based mode ?

4130

Collect potential inter merge candidate for current PU

Regular merge list construction with template matching cost-based sorting of candidates

4120

Compute HoC of collected potential candidates

4140

Occurrence-based sorting of potential merge candidates by descending occurrence level

4150

Keep N first candidates

4160

Derive MV predictor from constructed merge list and merge index

4170

END

FIG. 41

FIG. 42

FIG. 43

Europäisches
Patentamt

European
Patent Office

Office européen
des brevets

## EUROPEAN SEARCH REPORT

**Application Number**

EP 24 30 6097

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | EP 3 456 050 B1 (QUALCOMM INC [US])<br>7 September 2022 (2022-09-07)<br>* claim 1 *<br>* paragraph [0001] *<br>* paragraph [0070] *<br>* paragraph [0170] *<br>* paragraph [0199] *<br>----- | 1-8,<br>11-13<br>9,10 | INV.<br>H04N19/105<br>H04N19/109<br>H04N19/176<br>H04N19/52 |
| A | ZHANG (BYTEDANCE) N ET AL:<br>"EE2-3.1/EE2-3.2: Adaptive Reordering of<br>Merge Candidates with Template/Bilateral<br>Matching",<br>23. JVET MEETING; 20210707 - 20210716;<br>TELECONFERENCE; (THE JOINT VIDEO<br>EXPLORATION TEAM OF ISO/IEC JTC1/SC29/WG11<br>AND ITU-T SG.16 ),<br>,<br>no. JVET-W0090 ; m57205<br>5 July 2021 (2021-07-05), XP030295994,<br>Retrieved from the Internet:<br>URL:https://jvet-experts.org/doc_end_user/<br>documents/23_Teleconference/wg11/JVET-W009<br>0-v2.zip JVET-W0090_r1.docx<br>[retrieved on 2021-07-05]<br>* abstract *<br>* Section 2.1 *<br>----- | 3-5 | |

-/--

**TECHNICAL FIELDS SEARCHED (IPC)**

H04N

The present search report has been drawn up for all claims

| Place of search | Date of completion of the search | Examiner |
|---|---|---|
| The Hague | 22 December 2024 | Molina Sedgwick, S |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 3

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JOSHI R L ET AL: "Lossy encoding of motion vectors using entropy-constrained vector quantization", PROCEEDINGS OF THE INTERNATIONAL CONFERENCE ON IMAGE PROCESSING. (ICIP). WASHINGTON, OCT. 23 - 26, 1995; [PROCEEDINGS OF THE INTERNATIONAL CONFERENCE ON IMAGE PROCESSING. (ICIP)], LOS ALAMITOS, IEEE COMP. SOC. PRESS, US, vol. 3, 23 October 1995 (1995-10-23), pages 109-112, XP010197142, DOI: 10.1109/ICIP.1995.537592 ISBN: 978-0-7803-3122-8 * abstract * * Section 1, point 2; column 2 * | 8 | |
| A | SANG-YEON KIM ET AL: "ANALYSIS OF THE EFFECT OF MOTION ESTIMATION ERROR ON THE MOTION ADAPTIVE SPATIAL FILTER AND ITS APPLICATION", OPTICAL ENGINEERING, SOCIETY OF PHOTO-OPTICAL INSTRUMENTATION ENGINEERS, 1000 20TH ST. BELLINGHAM WA 98225-6705 USA, vol. 35, no. 7, 1 July 1996 (1996-07-01), pages 2045-2050, XP000631030, ISSN: 0091-3286 * Section 3.4 * | 8 | TECHNICAL FIELDS SEARCHED (IPC) |
| | -/-- | | |

The present search report has been drawn up for all claims

| Place of search | Date of completion of the search | Examiner |
|---|---|---|
| The Hague | 22 December 2024 | Molina Sedgwick, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 3

**EUROPEAN SEARCH REPORT**

**Application Number**

**EP 24 30 6097**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JENS-RAINER OHM: "Registered Responses to the CfP on Scalable Video Coding", 68. MPEG MEETING; 20040315 - 20040319; MUNCHEN; (MOTION PICTURE EXPERT GROUP OR ISO/IEC JTC1/SC29/WG11), , no. m10569 9 March 2004 (2004-03-09), XP030278316, Retrieved from the Internet: URL:http://phenix.int-evry.fr/mpeg/doc_end_user/documents/68_Munchen/contrib/m10569.zip S15.doc [retrieved on 2010-08-27] * Section 5.3 * | 9,10 | |
| A | COBAN M ET AL: "Algorithm description of Enhanced Compression Model 13 (ECM 13)", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH2025 ; m68146 26 June 2024 (2024-06-26), XP030319932, Retrieved from the Internet: URL:https://jvet-experts.org/doc_end_user/documents/34_Rennes/wg11/JVET-AH2025-v1.zip JVET-AH2025-v1.docx [retrieved on 2024-06-26] * Section 3.2.5 * | 11 | TECHNICAL FIELDS SEARCHED (IPC) |

The present search report has been drawn up for all claims

| Place of search | Date of completion of the search | Examiner |
|---|---|---|
| The Hague | 22 December 2024 | Molina Sedgwick, S |

page 3 of 3

# EP 4 676 034 A1

## ANNEX TO THE EUROPEAN SEARCH REPORT
## ON EUROPEAN PATENT APPLICATION NO.

EP 24 30 6097

This annex lists the patent family members relating to the patent documents cited in the above-mentioned European search report.
The members are as contained in the European Patent Office EDP file on
The European Patent Office is in no way liable for these particulars which are merely given for the purpose of information.

22-12-2024

| Patent document cited in search report | | Publication date | Patent family member(s) | Publication date |
|---|---|---|---|---|
| EP 3456050 | B1 | 07-09-2022 | BR 112018073324 A2 | 26-02-2019 |
| | | | CA 3020265 A1 | 16-11-2017 |
| | | | CN 109076236 A | 21-12-2018 |
| | | | CN 115633167 A | 20-01-2023 |
| | | | EP 3456050 A1 | 20-03-2019 |
| | | | EP 4102839 A1 | 14-12-2022 |
| | | | JP 7229774 B2 | 28-02-2023 |
| | | | JP 7543325 B2 | 02-09-2024 |
| | | | JP 2019515587 A | 06-06-2019 |
| | | | JP 2022058517 A | 12-04-2022 |
| | | | JP 2023145503 A | 11-10-2023 |
| | | | KR 20190008214 A | 23-01-2019 |
| | | | KR 20210122887 A | 12-10-2021 |
| | | | US 2017332099 A1 | 16-11-2017 |
| | | | US 2020077116 A1 | 05-03-2020 |
| | | | WO 2017197126 A1 | 16-11-2017 |

EPO FORM P0459

For more details about this annex : see Official Journal of the European Patent Office, No. 12/82

54

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Versatile Video Coding, Standard ITU- T H.266. *ISO/IEC 23090-3*, 2020
- Versatile video coding. *ITU-T H.266, TELECOMMUNICATION STANDARDIZATION SECTOR OF ITU, SERIES H: AUDIOVISUAL AND MULTIMEDIA SYSTEMS Infrastructure of audiovisual services - Coding of moving video*, April 2022
- **M. COBAN ; R.-L. LIAO ; K. NASER ; J. STRÖM ; L. ZHANG**. Algorithm description of Enhanced Compression Model 11 (ECM 11). *JVET-AF2025, 32nd JVET Meeting, Hannover, DE*, October 2023